# EUROPEAN PATENT APPLICATION

(11) **EP 4 657 762 A1**
(43) Date of publication of application: **03.12.2025**
(21) Application number: 23927171.1
(22) Date of filing: 30.11.2023
(51) Int. Cl.: H04B 5/00, H01Q 1/52

(54) **ANTENNA APPARATUS AND ELECTRONIC DEVICE**

(30) Priority: 15.03.2023 CN 202310278023
(71) Applicant: Honor Device Co., Ltd., Shenzhen, Guangdong 518040 (CN)
(72) Inventor: BAO, Lifen, Shenzhen, Guangdong 518040 (CN); LIU, Dongping, Shenzhen, Guangdong 518040 (CN); ZHOU, Dawei, Shenzhen, Guangdong 518040 (CN); LIANG, Tiezhu, Shenzhen, Guangdong 518040 (CN); SONG, Jiaxiang, Shenzhen, Guangdong 518040 (CN)
(74) Representative: Goddar, Heinz J.
(86) International application number: PCT/CN2023/135490
(87) International publication number: WO 2024/187830

(57) **Abstract**

This application provides an antenna apparatus and an electronic device. A relay coil is added near a main coil of the antenna apparatus, and a corresponding matching circuit is designed for the relay coil, to control a current direction of the relay coil to be the same as/opposite to a current direction of the main coil, so that magnetic fields generated by the main coil and the relay coil are superposed at a peer coil to achieve an effect of magnetic field enhancement. In addition, when the antenna apparatus is applied to an electronic device, if there is a metal assembly near the antenna apparatus in the electronic device, a current direction of the relay coil is the same as/opposite to a current direction of the main coil by designing a corresponding matching circuit, and correspondingly, a current of the metal assembly is opposite to/the same as a current of the main coil, so that magnetic fields generated by the main coil, the relay coil, and the metal assembly are superposed at a peer coil to achieve an effect of enhancing a net magnetic field, thereby counterbalancing/reducing shielding impact of the metal assembly on the main coil, thereby improving performance of the antenna apparatus.

## Description

This application claims priority to Chinese Patent Application No. 202310278023.8, filed with the China National Intellectual Property Administration on March 15, 2023 and entitled "ANTENNA APPARATUS AND ELECTRONIC DEVICE", which is incorporated herein by reference in its entirety.

### TECHNICAL FIELD

The present invention relates to the field of antenna technologies, and in particular, to an antenna apparatus and an electronic device.

### BACKGROUND

As users have increasingly high requirements on portability, an appearance, and the like of electronic devices, the electronic devices are not only designed to be very light and thin, but also use a housing made of a metal material. In addition, available space of an antenna in an electronic device is limited, and an electromagnetic wave radiated by the antenna is shielded by the metal housing. The foregoing situations all degrade antenna performance and affect user experience.

How to resolve the foregoing problem, that is, improve performance of an antenna, is a problem to be resolved urgently.

### SUMMARY

This application provides an antenna apparatus and an electronic device. A relay coil is added near a main coil of the antenna apparatus, and a corresponding matching circuit is designed for the relay coil, to control a current direction of the relay coil to be the same as/opposite to a current direction of the main coil, so that magnetic fields generated by the main coil and the relay coil are superposed at a peer coil to achieve an effect of magnetic field enhancement, thereby improving performance of the antenna apparatus.

According to a first aspect, this application provides an electronic device. the electronic device includes a near-field communication (NFC) antenna apparatus, and the NFC antenna apparatus includes: a main coil, and one or more relay coils, where the relay coil is coupled to the main coil, the relay coil is located between the main coil and a first face of the electronic device, and the first face is a contact face of the electronic device when performing NFC; and a distance between the relay coil and the main coil is less than a first value, and a resonance frequency of the relay coil is higher than a working frequency of the main coil; or a distance between the relay coil and the main coil is greater than a second value, and a resonance frequency of the relay coil is higher/lower than a working frequency of the main coil.

After the electronic device provided in the first aspect of this application is used, an NFC communication distance can be increased, thereby improving performance of the NFC antenna apparatus.

With reference to the electronic device provided in the first aspect, that the relay coil is coupled to the main coil means that when the electronic device supplies power to the main coil, the relay coil generates an induction current.

In this way, the relay coil may be coupled to the main coil to generate a magnetic field, so that when the electronic device performs NFC with a peer device, a magnetic field strength sensed by the peer device may be enhanced, thereby increasing an NFC communication distance and improving performance of the NFC antenna apparatus.

With reference to the electronic device provided in the first aspect, that the relay coil is coupled to the main coil means that a projection region of the relay coil on a plane in which the main coil is located has an overlapping part with the main coil, or a distance between the projection region and the main coil is less than a threshold when the projection region has no overlapping part with the main coil.

In this way, to ensure that the relay coil is coupled to the main coil, the relay coil may be at various relative positions near the main coil.

With reference to the electronic device provided in the first aspect, a size of the relay coil is greater than, less than, or equal to a size of the main coil.

In this way, there may be a plurality of design solutions for the size of the relay coil, which specifically depends on available space of the electronic device. When there is a relatively large amount of available space of the electronic device, the size of the relay coil may be set to be relatively large. In this way, an NFC communication distance can be prolonged to a larger extent, and an NFC card reading and swiping area can be increased. When the relay coil is designed to be relatively small, space of the electronic device can be saved, and an NFC communication distance can be improved to some extent.

According to a second aspect, this application provides an electronic device. the electronic device includes an NFC antenna apparatus, and the NFC antenna apparatus includes: a main coil, and one or more relay coils, where the relay coil is coupled to the main coil, the relay coil is located on a first side of the main coil and is also located on a first side of a first face of the electronic device, and the first face is a contact face of the electronic device when performing NFC; a distance between the relay coil and the main coil is less than a third value, and a size of the relay coil is greater than a size of the main coil; and a region in which a projection region of the main coil on a plane in which the relay coil is located overlaps with the relay coil is greater than a region in which the projection region of the main coil on the plane in which the relay coil is located does not overlap with the relay coil, and a resonance frequency of the relay coil is higher than a working frequency of the main coil; or a region in which a projection region of the main coil on a plane in which the relay coil is located overlaps with the relay coil is less than a region in which the projection region of the main coil on the plane in which the relay coil is located does not overlap with the relay coil, and a resonance frequency of the relay coil is lower than a working frequency of the main coil.

After the electronic device provided in the first aspect of this application is used, an NFC communication distance can be increased, thereby improving performance of the NFC antenna apparatus.

With reference to the electronic device provided in the second aspect, that the relay coil is coupled to the main coil means that when the electronic device supplies power to the main coil, the relay coil generates an induction current.

In this way, the relay coil may be coupled to the main coil to generate a magnetic field, so that when the electronic device performs NFC with a peer device, a magnetic field strength sensed by the peer device may be enhanced, thereby increasing an NFC communication distance and improving performance of the NFC antenna apparatus.

With reference to the electronic device provided in the second aspect, that the relay coil is coupled to the main coil means that a projection region of the relay coil in a plane in which the main coil is located has an overlapping part with the main coil.

In this way, to ensure that the relay coil is coupled to the main coil, the relay coil may be at various relative positions near the main coil.

According to a third aspect, this application provides an electronic device. the electronic device includes an NFC antenna apparatus and a metal assembly, and the NFC antenna apparatus includes: a main coil, and one or more relay coils, where the relay coil is coupled to the main coil, the relay coil is located between the main coil and a first face of the electronic device, and the first face is a contact face of the electronic device when performing NFC; the relay coil is further coupled to the metal assembly, and the metal assembly is located between the main coil and the first face of the electronic device; and a size of the relay coil is less than, equal to, or greater than a size of the metal assembly, and a resonance frequency of the relay coil is higher than a working frequency of the main coil; or a size of the relay coil is at least less than twice a size of the metal assembly, and a resonance frequency of the relay coil is lower than a working frequency of the main coil.

After the electronic device provided in the third aspect of this application is used, shielding impact of the metal assembly on an NFC signal can be reduced/counterbalanced, thereby improving performance of the NFC antenna apparatus.

With reference to the electronic device provided in the third aspect, that the relay coil is coupled to the main coil means that when the electronic device supplies power to the main coil, the relay coil generates an induction current.

In this way, the relay coil may be coupled to the main coil to generate a magnetic field, so that when the electronic device performs NFC with a peer device, a magnetic field strength sensed by the peer device may be enhanced, thereby increasing an NFC communication distance and improving performance of the NFC antenna apparatus.

With reference to the electronic device provided in the third aspect, that the relay coil is coupled to the main coil means that a projection region of the relay coil on a plane in which the main coil is located has an overlapping part with the main coil, or a distance between the projection region and the main coil is less than a threshold when the projection region has no overlapping part with the main coil.

In this way, relative positions of the main coil and the relay coil can be freely designed according to available space of the electronic device. There are a plurality of implementations. When the relative positions are different, it can be ensured that NFC communication performance is improved by adjusting a current direction of only the relay coil.

With reference to the electronic device provided in the third aspect, that the relay coil is further coupled to the metal assembly means that when the relay coil generates an induction current, the metal assembly also generates an induction current.

In this way, the metal assembly and the relay coil may generate a magnetic field, so that when the electronic device performs NFC with a peer device, a net magnetic field strength sensed by the peer device may be enhanced, thereby improving performance of the NFC antenna apparatus.

With reference to the electronic device provided in the third aspect, that the relay coil is further coupled to the metal assembly means that a projection region of the relay coil on a plane of the metal assembly has an overlapping part with the metal assembly, or a distance between the projection region and the metal assembly is less than a threshold when the projection region has no overlapping part with the metal assembly coil.

In this way, relative positions and sizes of the relay coil and the metal assembly may be freely designed according to available space of the electronic device. Specifically, there may be a plurality of implementations. When the relative positions are different, it can be ensured that NFC communication performance is improved by adjusting a current direction of only the relay coil.

With reference to the electronic device provided in the first, second, or third aspect, the relay coil is further connected to a matching circuit; and when the relay coil is equivalent to an inductor, the matching circuit includes a capacitor, one end of the capacitor is connected to the relay coil, and the other end of the capacitor is grounded; or when the relay coil is equivalent to a capacitor, the matching circuit includes an inductor, one end of the inductor is connected to the relay coil, and the other end of the inductor is grounded.

In this way, the matching circuit may be connected to the relay coil, so as to construct a resonance circuit for the relay coil. The resonance circuit is used for adjusting a resonance frequency of the relay coil, so as to determine whether a current direction in the relay coil is the same as a current direction in the main coil, so as to improve performance of the antenna apparatus.

With reference to the electronic device provided in the first, second, or third aspect, the relay coil is a coil in a first antenna apparatus in the electronic device, and a working frequency of the first antenna apparatus is different from a working frequency of the NFC antenna apparatus.

In this way, the relay coil and another antenna apparatus in the electronic device may be collectively designed. When the relay coil and the first antenna apparatus are collectively designed, a working frequency of the first antenna apparatus may be higher than a working frequency of the NFC antenna apparatus, thereby improving coil utilization, saving space of the electronic device, and reducing costs.

With reference to the electronic device provided in the first, second, or third aspect, the working frequency of the first antenna apparatus is higher than the working frequency of the NFC antenna apparatus, and a difference between the working frequency of the first antenna apparatus and the working frequency of the NFC antenna apparatus is greater than a fourth value.

In this way, when the difference between the working frequency of the first antenna apparatus and the working frequency of the NFC antenna apparatus is greater than the fourth value, it can be ensured that the two working frequencies do not interfere with each other.

With reference to the electronic device provided in the first, second, or third aspect, the relay coil is further connected to a matching circuit; and the matching circuit includes a fifth capacitor, a sixth capacitor, a seventh capacitor, an eighth capacitor, a second inductor, and a third inductor; one end of the fifth capacitor is connected to a first end of the relay coil, the other end of the fifth capacitor is connected to the first antenna apparatus, one end of the sixth capacitor is connected to a second end of the relay coil, and the other end of the sixth capacitor is connected to the first antenna apparatus; and the fifth capacitor and the sixth capacitor are configured to prevent a signal of the NFC antenna apparatus from passing through; and one end of the second inductor is connected to the first end of the relay coil, the other end of the second inductor is connected in series to the seventh capacitor and then is grounded, one end of the third inductor is connected to the second end of the relay coil, and the other end of the third inductor is connected in series to the eighth capacitor and then is grounded; and the second inductor and the third inductor are configured to prevent a signal of the first antenna apparatus from passing through.

In this way, to ensure that signals between the first antenna apparatus and the NFC antenna apparatus do not interfere with each other, the matching circuit is designed to prevent the signal of the NFC antenna apparatus from passing through a path of the first antenna apparatus and prevent the signal of the first antenna apparatus from passing through a path of the NFC antenna apparatus.

With reference to the electronic device provided in the first, second, or third aspect, the relay coil is further connected to a matching circuit; and the matching circuit includes a ninth capacitor, a tenth capacitor, an eleventh capacitor, a twelfth capacitor, a thirteenth capacitor, a fourteenth capacitor, a fourth inductor, and a fifth inductor; one end of the thirteenth capacitor is connected to a first end of the relay coil, the other end of the thirteenth capacitor is connected to the first antenna apparatus, one end of the fourteenth capacitor is connected to a second end of the relay coil, and the other end of the fourteenth capacitor is connected to the first antenna apparatus; and the thirteenth capacitor and the fourteenth capacitor are configured to prevent a signal of the NFC antenna apparatus from passing through; and the fourth inductor is connected in parallel to the ninth capacitor, one end of the fourth inductor is connected to the first end of the relay coil, the other end of the fourth inductor is connected in series to the tenth capacitor and then is grounded, the fifth inductor is connected in parallel to the eleventh capacitor, one end of the fifth inductor is connected to the second end of the relay coil, and the other end of the fifth inductor is connected in series to the twelfth capacitor and then is grounded; and the fourth inductor and the fifth inductor are configured to prevent a signal of the first antenna apparatus from passing through.

In this way, the matching circuit may be further designed to protect the signal of the first antenna apparatus from being affected when it is ensured that the signal of the NFC antenna apparatus and the signal of the first antenna apparatus do not affect each other.

With reference to the electronic device provided in the first, second, or third aspect, the working frequency of the first antenna apparatus is lower than the working frequency of the NFC antenna apparatus, and a difference between the working frequency of the first antenna apparatus and the working frequency of the NFC antenna apparatus is less than a fifth value.

In this way, when the difference between the working frequency of the first antenna apparatus and the working frequency of the NFC antenna apparatus is greater than the fifth value, it can be ensured that the two working frequencies do not interfere with each other.

With reference to the electronic device provided in the first, second, or third aspect, the relay coil is further connected to a matching circuit; and the matching circuit includes a fifteenth capacitor, a sixteenth capacitor, a seventeenth capacitor, a sixth inductor, and a seventh inductor; one end of the fifteenth capacitor is connected to a first end of the relay coil, and the other end of the fifteenth capacitor is connected to a second end of the relay coil; and the fifteenth capacitor is configured to prevent a signal of the first antenna apparatus from passing through; and the sixth inductor is connected in parallel to the sixteenth capacitor, one end of the sixth inductor is connected to the first end of the relay coil, and the other end of the sixth inductor is connected to a circuit of the first antenna apparatus; the seventh inductor is connected in parallel to the seventeenth capacitor, one end of the seventh inductor is connected to the second end of the relay coil, and the other end of the seventh inductor is connected to the circuit of the first antenna apparatus; and the sixth inductor and the seventh inductor are configured to prevent a signal of the NFC antenna apparatus from passing through.

In this way, to ensure that signals between the first antenna apparatus and the NFC antenna apparatus do not interfere with each other, the matching circuit is designed to prevent the signal of the NFC antenna apparatus from passing through a path of the first antenna apparatus and prevent the signal of the first antenna apparatus from passing through a path of the NFC antenna apparatus.

### BRIEF DESCRIPTION OF DRAWINGS

FIG. 1 is a schematic diagram of parameters between a sending coil and a receiving coil in an ideal situation according to an embodiment of this application;
FIG. 2A to FIG. 2D are schematic diagrams of parameters between a sending coil and a receiving coil in several actual applications according to an embodiment of this application;
FIG. 3A to FIG. 3D are schematic diagrams of several relay coils added to an antenna apparatus according to an embodiment of this application;
FIG. 4A to FIG. 4F are schematic diagrams of matching circuits corresponding to several relay coils according to an embodiment of this application;
FIG. 5A to FIG. 5I are schematic diagrams of several antenna apparatuses applied to a mobile phone according to an embodiment of this application;
FIG. 6 is a schematic diagram of an antenna apparatus applied to a watch according to an embodiment of this application;
FIG. 7A to FIG. 7B are schematic diagrams of several antenna apparatuses applied to a computer according to an embodiment of this application;
FIG. 8 is a schematic diagram of an antenna apparatus applied to a remote control according to an embodiment of this application;
FIG. 9 is a schematic diagram of an antenna apparatus applied to a stereo according to an embodiment of this application;
FIG. 10A to FIG. 10C are schematic diagrams of several antenna apparatuses for testing magnetic flux according to an embodiment of this application;
FIG. 11 is a schematic diagram of simulation of an antenna apparatus according to an embodiment of this application;
FIG. 12 is a schematic diagram of simulation of another antenna apparatus according to an embodiment of this application; and
FIG. 13 is a schematic diagram of a wireless communication system 10 according to an embodiment of this application.

### DESCRIPTION OF EMBODIMENTS

The following clearly and completely describes the technical solutions in embodiments of this application with reference to the accompanying drawings. In the descriptions of embodiments of this application, unless otherwise specified, "/" represents "or". For example, A/B may represent A or B. In this specification, "and/or" is merely an association relationship for describing associated objects, and represents that three relationships may exist. For example, A and/or B may represent the following three cases: Only A exists, both A and B exist, and only B exists.

The terms "first" and "second" below are used for descriptive purposes only, and cannot be construed as implying or implying relative importance or implicitly indicating the number of technical features indicated. Therefore, features defined with "first" and "second" may explicitly or implicitly include one or more features. In the descriptions of the embodiments of this application, unless otherwise stated, "a plurality of' means two or more.

An "embodiment" in this application means that specific features, structures, or characteristics described with reference to this embodiment may be included in at least one embodiment of this application. The term appearing at various positions in the specification does not necessarily refer to a same embodiment, or an independent or alternative embodiment mutually exclusive with another embodiment. A person skilled in the art explicitly or implicitly understands that embodiments described in this application may be combined with other embodiments.

One or more antennas may be disposed in an electronic device to implement a corresponding function. For example, an antenna is disposed to implement a near-field communication (Near-field communication, NFC) function. For another example, an antenna is disposed to implement wireless charging (Wireless Power Consortium, WPC).

In a process of transmitting information/energy by using an antenna technology, transmission efficiency of an antenna may be affected by parameters such as a distance between a sending coil and a receiving coil, a size ratio, an alignment angle, and a transmission medium.

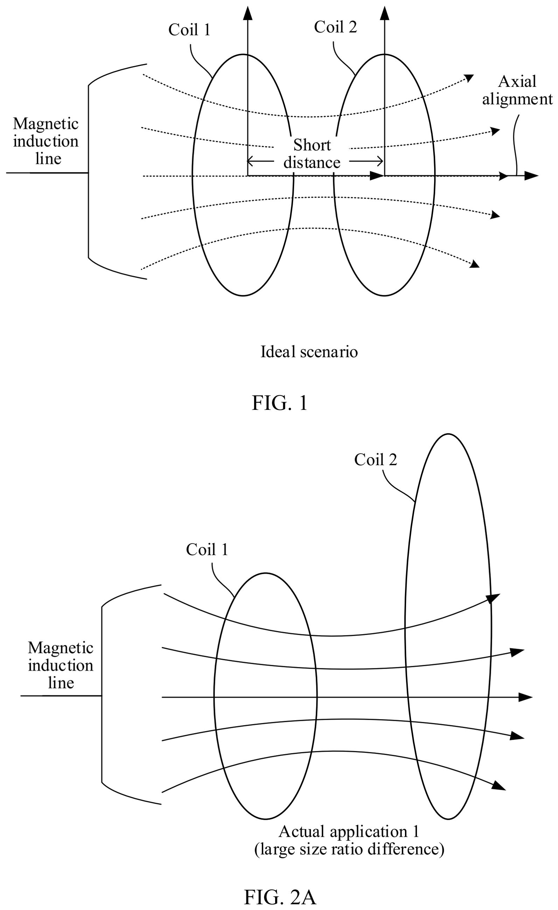

FIG. 1 is an example of a schematic diagram of parameters between a sending coil and a receiving coil in an ideal situation.

As shown in FIG. 1, a coil 1 may be a sending coil/receiving coil, and correspondingly, a coil 2 is a receiving coil/sending coil. In an ideal scenario, only when parameters between a sending coil and a receiving coil need to satisfy conditions such as a size ratio close to 1:1, a short distance, axial alignment, and absence of a magnetic isolation medium (for example, magnet or metal), the transmission effect is high.

FIG. 2A to FIG. 2D are separate examples of schematic diagrams of parameters between a sending coil and a receiving coil in several actual applications.

As shown in FIG. 2A to FIG. 2D, a coil 1 may be a sending coil/receiving coil, and correspondingly, a coil 2 is a receiving coil/sending coil. Assuming that the coil 1 is a coil included in an antenna apparatus of a local electronic device, the coil 2 is a coil included in a peer antenna apparatus.

As shown in FIG. 2A, in actual application 1, because an antenna apparatus disposed inside an electronic device is limited in size, and the coil 1 is relatively small relative to the coil 2 in another antenna apparatus, a difference between size ratios of a sending coil and a receiving coil is large.

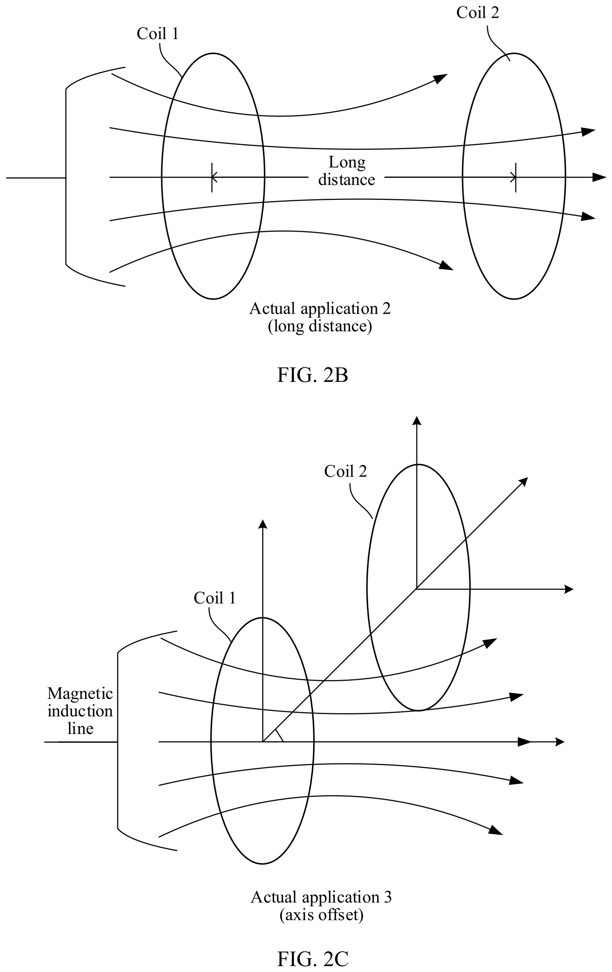

As shown in FIG. 2B, in actual application 2, because an antenna apparatus disposed inside an electronic device is affected by a user operation behavior (for example, the coil 1 in the antenna apparatus of the local electronic device is not brought into proximity with the coil 2 in the peer antenna apparatus), a distance between a sending coil and a receiving coil is long.

As shown in FIG. 2C, in actual application 3, because an antenna apparatus disposed inside an electronic device is affected by a user operation behavior (for example, the coil 1 in the antenna apparatus of the local electronic device is not aligned with the coil 2 in the peer antenna apparatus), axis offset occurs between a sending coil and a receiving coil.

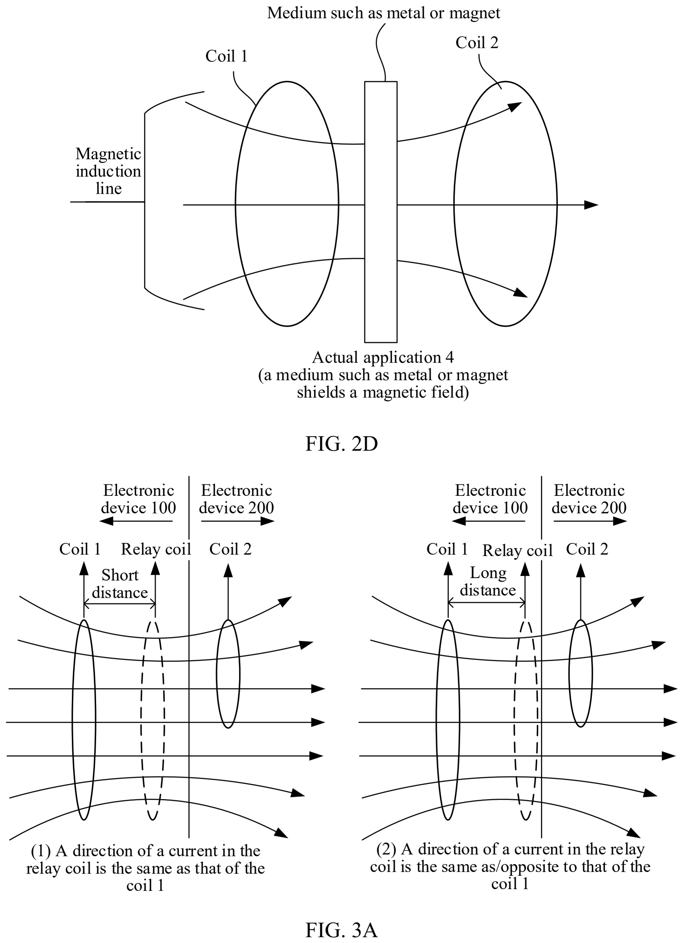

As shown in FIG. 2D, in actual application 4, an antenna apparatus disposed inside an electronic device is affected by a nearby magnetic isolation medium such as metal or magnet. Consequently, a medium for shielding an electromagnetic wave exists between a sending coil and a receiving coil, thereby affecting transmission performance of the antenna. The metal may be a metal decorative sheet or a metal decorative ring on a housing of the electronic device. The magnet may be a magnet assembly designed for WPC when an antenna apparatus (for example, an NFC apparatus) and another antenna apparatus (for example, a WPC apparatus) are collectively designed in the electronic device.

It may be understood that, FIG. 2A to FIG. 2D merely show examples of several cases in which performance of an antenna apparatus is affected in actual application. In addition, there may be more cases in which the performance of the antenna is affected. For example, when an electronic device to which the antenna apparatus is applied is designed to be lighter and thinner, a large block of ferrite under a coil in the antenna apparatus is cut off. Consequently, a quality factor (quality factor, Q factor) of the coil is reduced, and the performance of the antenna apparatus is severely degraded.

To alleviate a case in which transmission performance of an antenna is relatively low in actual application, this application provides an antenna apparatus and an electronic device. Specifically, a relay coil is added near a main coil of the antenna apparatus, and a corresponding matching circuit is designed for the relay coil, to control a current direction of the relay coil to be the same as/opposite to a current direction of the main coil, so that magnetic fields generated by the main coil and the relay coil are superposed at a peer coil to achieve an effect of magnetic field enhancement.

In addition, when the antenna apparatus is applied to an electronic device, if there is a metal assembly near the antenna apparatus in the electronic device, a current direction of the relay coil is the same as/opposite to a current direction of the main coil by designing a corresponding matching circuit, and correspondingly, a current of the main coil is opposite to/the same as that of the metal assembly, so that magnetic fields generated by the main coil, the relay coil, and the metal assembly are superposed at a peer coil to achieve an effect of enhancing a net magnetic field, thereby counterbalancing/reducing shielding impact of the metal assembly on the main coil.

After the antenna apparatus designed in this application is used, robustness of an antenna transmission system is improved. That is, even when a sending coil and a receiving coil have a large size ratio difference between each other, are at a long distance from each other, are not axially aligned with each other, or have a magnet or metal medium between each other, or a ferrite of a coil is insufficient, effective information transmission can still be implemented between the antenna apparatus and a peer antenna in the antenna transmission system.

In this embodiment of this application, the antenna apparatus may be specifically an apparatus providing an NFC function, and the antenna apparatus may be integrated into an electronic device. In this way, a card reading and swiping distance and a card reading and swiping area of the NFC function of the electronic device can be increased to a larger extent, making it convenient for a user to use the NFC function, thereby improving user experience.

In this embodiment of this application, the relay coil may include any one or more of the following: a reused existing coil of another antenna apparatus in the electronic device, for example, a cellular antenna (the another antenna apparatus may also be referred to as a first antenna apparatus), a reused metal assembly in the electronic device, for example, a decorative sheet in a camera module on a housing of the electronic device, or a new coil added to available space of the electronic device. This is not limited in this embodiment of this application.

In this embodiment of this application, a position of the relay coil is determined according to the available space of the electronic device to which the antenna apparatus is applied, and may be specifically disposed at any one or more of the following places: disposed between the main coil in the antenna apparatus and the first face of the electronic device, or disposed on the first side of the main coil and also located on the first side of the first face of the electronic device (that is, disposed on the same side of the main coil and the first face of the electronic device). The first face is a contact face of the electronic device when performing NFC with the peer antenna apparatus. The contact face may be a battery back cover of the electronic device, a screen of the electronic device, a touch region or a key region of the electronic device, a keyboard of the electronic device, or the like. In addition, the foregoing first side refers to a side that is of the main coil or two sides of the first face of the electronic device and that is away from the peer antenna apparatus when the electronic device performs NFC with the peer antenna apparatus. For example, when the battery back cover of the electronic device is used as an NFC contact face, the first side is a side that is of the main coil and that is away from the battery back cover and is close to a display screen.

In this embodiment of this application, the main coil may be connected to a feeding network of the antenna, and therefore is referred to as a "main antenna". The relay coil is not connected to the feeding network, and is excited to generate radiation due to being coupled to the main coil. That the relay coil is configured to be coupled to the main coil means that when the electronic device supplies power to the main coil, the relay coil can generate an induction current. Alternatively, that the relay coil is coupled to the main coil means that a projection region of the relay coil on a plane in which the main coil is located has an overlapping part with the main coil, or a distance between the projection region and the main coil is less than a threshold when the projection region has no overlapping part with the main coil. The threshold may not be a fixed value. Specifically, a larger direction-Z distance between the main coil and the relay coil (that is, a distance between center points of the two coils) indicates a smaller corresponding threshold, and a smaller direction-Z distance between the main coil and the relay coil indicates a larger corresponding threshold. Similarly, for descriptions about coupling of the metal assembly to the relay coil, refer to the foregoing descriptions about coupling of the relay coil to the main coil.

In addition, there may be one or more relay coils. This is not limited in this embodiment of this application. However, when the relay coil is disposed at different positions, different magnetic field enhancement effects are brought. For details, refer to detailed descriptions below. Details are not described herein again.

In this embodiment of this application, the matching circuit corresponding to the relay coil is a circuit formed by a capacitor (capacitance, C) and/or an inductor (Inductor, L). The relay coil and the matching circuit form a resonance circuit. After L and C in the matching circuit are determined, a resonance frequency of the relay coil is fixed. Therefore, in this application, the matching circuit is designed to adjust the resonance frequency of the relay coil to a target value, so that the resonance frequency of the relay coil is greater than/less than the working frequency of the main coil, to ensure that a current direction of the relay coil, a current direction of the main coil, and a current direction of the metal assembly satisfy a preset condition, thereby enhancing a net magnetic field and improving performance of the antenna apparatus. Specifically, when the resonance frequency of the relay coil is greater than the working frequency of the main coil, the relay coil is capacitive, and the current direction of the relay coil is the same as the current direction of the main coil. When the resonance frequency of the relay coil is less than the working frequency of the main coil, the relay coil is inductive, and the current direction of the relay coil is opposite to the current direction of the main coil.

A specific design method of an antenna apparatus provided in this application is described below.
1. First, a position and a size of a relay coil in an antenna apparatus are determined according to available space of an electronic device 100.

Next, design positions and sizes of several relay coils and corresponding design effects are described with reference to schematic diagrams of a coil 1, a coil 2, and a relay coil in FIG. 3A to FIG. 3D. Both the coil 1 and the relay coil are coils in the local antenna apparatus, the local antenna apparatus may be disposed in the electronic device 100, and the coil 1 may also be referred to as a main coil. The coil 2 is a coil in a peer antenna apparatus, and the peer antenna apparatus may be disposed in an electronic device 200. When the electronic device 100 using the local antenna apparatus communicates with the electronic device 200 using the peer antenna apparatus, one side (for example, a left side) of the coil 1 is a side away from the electronic device 200, and the other side (for example, a right side) is a side close to the electronic device 200.

FIG. 3A to FIG. 3C respectively show three design methods for a relay coil in an antenna apparatus when there is no other metal assembly near the antenna apparatus in the electronic device 100.

Referring to FIG. 3A, FIG. 3A is an example of a schematic design diagram of a relay coil of a group of antenna apparatuses.

As shown in FIG. 3A, the antenna apparatus of the electronic device 100 includes a coil 1 and a relay coil that is disposed on a right side of the coil 1, that is, a side close to the electronic device 200, and a size of the relay coil is equal to a size of the coil 1. In addition, the antenna apparatus may further include more relay coils, or may further include a matching circuit that is not shown. This is not limited in this embodiment of this application. For introduction of the matching circuit, refer to the following descriptions. Details are not described herein again.

In the foregoing case, if the relay coil is set to a position that is at a short distance to the coil 1 and that is shown in (1) in FIG. 3A, it needs to be ensured that directions of currents in the relay coil and the coil 1 are the same. The short distance means that a distance between the relay coil and the main coil is less than a first value. The reason is as follows: When the distance between the coil 1 and the relay coil is short, magnetic fields generated by the two coils at a same position such as a position of the coil 2 have almost equivalent magnetic induction strengths. Therefore, to improve transmission efficiency, it needs to be ensured that a magnetic field enhancement effect is sensed at the coil 2. That is, it needs to be ensured that magnetic field directions of the relay coil and the coil 1 are the same by setting directions of currents in the relay coil and the coil 1 to be the same. In this way, after the two magnetic fields are superposed, a stronger magnetic field can be generated at the coil 2. For a specific implementation method of controlling a direction of a current in the relay coil to be the same as that in the coil 1, refer to descriptions of a matching circuit design method below. Details are not described herein again.

In the foregoing case, if the relay coil is set to a position that is at a long distance to the main coil and that is shown in (2) in FIG. 3A, directions of currents in the relay coil and the coil 1 may be the same or different. The long distance means that a distance between the relay coil and the main coil is greater than a second value. The first value and the second value are equal or the second value is greater than the first value. The reason is as follows: When the distance between the coil 1 and the relay coil is long, magnetic induction strengths of magnetic fields generated by the two coils at a same position such as a position of the coil 2 are different. Particularly, because a distance between the coil 1 and the coil 2 is longer than a distance between the relay coil and the coil 2 to such an extent that the magnetic field of the coil 1 may be far less than the magnetic field of the relay coil at the position of the coil 2. In this case, impact generated by the magnetic field of the coil 1 on the coil 2 may be ignored, and only impact generated by the magnetic field of the relay coil on the coil 2 is considered. Therefore, regardless of whether the current of the relay coil is in a direction the same as and in a phase opposite to that of the main coil, transmission efficiency can be improved because the relay coil is closer to the coil 2. For a specific implementation method of controlling a direction of a current in the relay coil to be the same as/opposite to that in the coil 1, refer to descriptions of a matching circuit design method below. Details are not described herein again.

Design effects brought by (1) or (2) in FIG. 3A are embodied in: improving a wireless communication distance and expanding a relative angle between a sending coil and a receiving coil. Specifically, a shorter distance between the relay coil and the coil 1 indicates a more obvious improvement to the wireless communication distance and a smaller improvement to the relative angle between the sending coil and the receiving coil; and a longer distance between the relay coil and the coil 1 indicates a more obvious improvement to the relative angle between the sending coil and the receiving coil and a smaller improvement to the wireless communication distance. Using an NFC card reader function of the electronic device 100 as an example, increasing the wireless communication distance means that even when a distance between the electronic device 100 and an electronic device 201 is long, the electronic device 100 can still read information in the electronic device 201, and expanding the relative angle between the sending coil and the receiving coil means that an area of the electronic device 100 when performing card reading on the electronic device 201 is expanded. Using an NFC point-to-point communication function of the electronic device 100 as an example, increasing the wireless communication distance means that even when a distance between the electronic device 100 and an electronic device 202 is long, the electronic device 100 and the electronic device 202 can still transmit information between each other, and expanding the relative angle between the sending coil and the receiving coil means that even when the electronic device 100 is not aligned with the electronic device 202, the electronic device 100 and the electronic device 202 can still transmit information between each other. Using an NFC card mode function of the electronic device 100 as an example, increasing the wireless communication distance means that even when a distance between the electronic device 100 and an electronic device 203 is long, the electronic device 100 can still be recognized by the electronic device 203, and expanding the relative angle between the sending coil and the receiving coil means that a card swiping area of the electronic device 100 is expanded, that is, an area of the electronic device 100 that is recognized by the electronic device 203 is expanded.

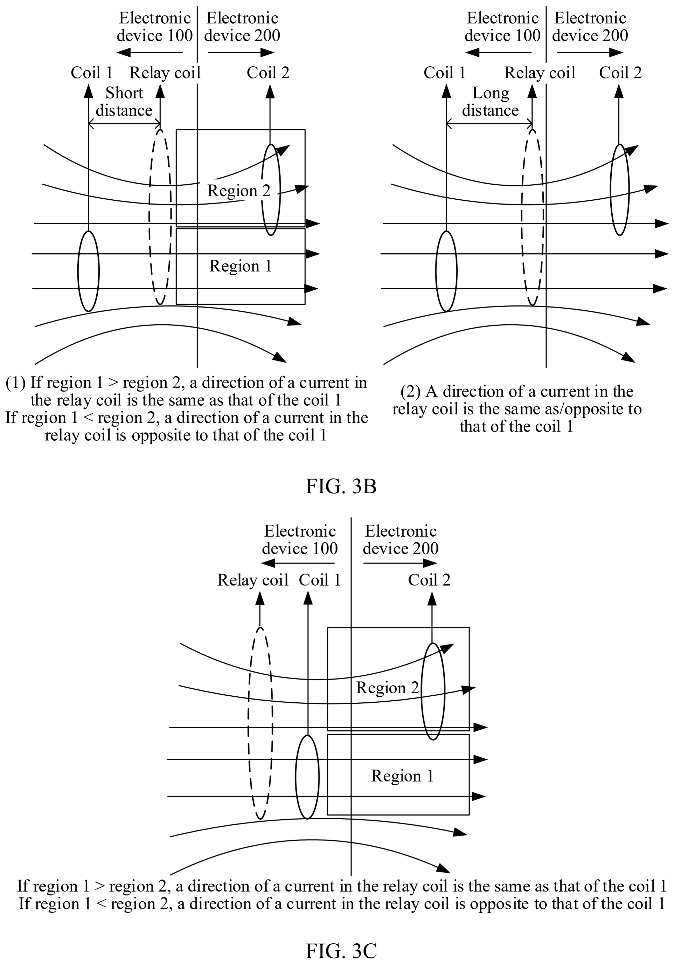

Referring to FIG. 3B, FIG. 3B is an example of a schematic design diagram of a relay coil of another group of antenna apparatuses.

As shown in FIG. 3B, the antenna apparatus of the electronic device 100 includes a coil 1 and a relay coil, and in addition, further includes a matching circuit (a design method of the matching circuit is described below) that is not shown, the relay coil is disposed on a right side of the coil 1, that is, a side close to the electronic device 200, and the relay coil is larger than the coil 1.

In the foregoing case, if the relay coil is set to a position that is close to the coil 1 and that is shown in (1) in FIG. 3B, a direction of a current in the relay coil and a direction of a current in the coil 1 may be the same or different, but specifically need to be determined according to sizes and relative positions of the coil 1 and the relay coil. The reason is as follows: When the coil 1 and the relay coil are relatively close to each other, both of magnetic fields generated by the two coils have some impact on a coil at the same position, for example, a coil 2, and a magnetic field generated by either of the two coils cannot be ignored. Therefore, the directions of the currents in the relay coil and the coil 1 need to be determined according to sizes, relative positions, and the like of the coil 1 and the relay coil, so as to ensure that a magnetic field enhancement effect is sensed at the coil 2. For example, when the direction of the current in the relay coil and the direction of the current in the coil 1 are the same, a region 1 is a region in which a magnetic field is enhanced after magnetic fields of the two coils are superposed, and a region 2 is a region in which magnetic fields of the two coils are counterbalanced. For another example, when the direction of the current in the relay coil and the direction of the current in the coil 1 are opposite, a region 1 is a region in which magnetic fields of the two coils are counterbalanced, and a region 2 is a region in which a magnetic field is enhanced after magnetic fields of the two coils are superposed. It can be learned that when the region 1 is larger than the region 2, the direction of the current in the relay coil and the direction of the current in the coil 1 are set to be the same; or when the region 1 is smaller than the region 2, the direction of the current in the relay coil and the direction of the current in the coil 1 are set to be opposite. In this way, it can be always ensured that a larger region is a region in which a magnetic field is enhanced. The region 1 is a region in which the relative positions of the coil 1 and the relay coil overlap, and the region 2 is a region in which the relative positions of the coil 1 and the relay coil do not overlap. For a specific implementation method of controlling a direction of a current in the relay coil to be the same as that in the coil 1, refer to descriptions of a matching circuit design method below. Details are not described herein again.

In the foregoing case, if the relay coil is set to a position that is at a long distance to the coil 1 and that is shown in (2) in FIG. 3B, directions of currents in the relay coil and the coil 1 may be the same or different. The reason is as follows: When the distance between the coil 1 and the relay coil is long, magnetic induction strengths of magnetic fields generated by the two coils at a same position such as a position of the coil 2 are different. Particularly, because a distance between the coil 1 and the coil 2 is longer than a distance between the relay coil and the coil 2 to such an extent that the magnetic field of the coil 1 may be far less than the magnetic field of the relay coil at the position of the coil 2. In this case, impact generated by the magnetic field of the coil 1 on the coil 2 may be ignored, and only impact generated by the magnetic field of the relay coil on the coil 2 is considered. Therefore, regardless of whether the current of the relay coil is in a direction the same as and in a phase opposite to that of the main coil, transmission efficiency can be improved because the relay coil is closer to the coil 2. For a specific implementation method of controlling a direction of a current in the relay coil to be the same as that in the coil 1, refer to descriptions of a matching circuit design method below. Details are not described herein again.

Design effects brought by (1) or (2) in FIG. 3B are embodied in: improving a wireless communication distance and expanding a relative angle between a sending coil and a receiving coil. Using an NFC card reader function of the electronic device 100 as an example, expanding a relative angle between a sending coil and a receiving coil means that even when the electronic device 100 is not aligned with an electronic device 201, the electronic device 100 can still read information in the electronic device 201. Using an NFC point-to-point communication function of the electronic device 100 as an example, expanding the relative angle between the sending coil and the receiving coil means that even when the electronic device 100 is not aligned with the electronic device 201, the electronic device 100 and the electronic device 202 can still transmit information between each other. Using an NFC card mode function of the electronic device 100 as an example, expanding the relative angle between the sending coil and the receiving coil means that even when the electronic device 100 is not aligned with the electronic device 201, the electronic device 100 can still be recognized by an electronic device 203.

It should be noted that, the short distance, that is, the distance being less than the first value, and the long distance, that is, the distance being greater than the second value shown in FIG. 3A to FIG. 3B are two relative concepts, and may be specifically affected by a position of the coil 2 in actual application. That is, the short distance and the long distance are not specifically limited, but both satisfy one condition. That is, the short distance means that, when the coil 2 is A centimeters away from the coil 1, magnetic induction strengths of magnetic fields of the coil 1 and the relay coil are equivalent to each other at the coil 2, and therefore impact of neither of the two magnetic fields on the coil 2 can be ignored; and the long distance means that when the coil 2 is at the foregoing position of A centimeters, a magnetic induction strength of a magnetic field of the coil 1 at the coil 2 is extremely small, while a magnetic induction strength of a magnetic field of the relay coil at the coil 2 is relatively large, so that impact of the magnetic field of the coil 1 on the coil 2 can be ignored, while impact of the magnetic field of the relay coil on the coil 2 cannot be ignored.

Referring to FIG. 3C, FIG. 3C is an example of a schematic design diagram of a relay coil of another group of antenna apparatuses.

As shown in FIG. 3C, the antenna apparatus of the electronic device 100 includes a coil 1 and a relay coil, and in addition, further includes a matching circuit (a design method of the matching circuit is described below) that is not shown, the relay coil is disposed on a left side of the coil 1, that is, a side away from the electronic device 200, and the relay coil is larger than the coil 1.

In this case, a distance between the relay coil and the coil 2 is larger than a distance between the coil 1 and the coil 2. Therefore, to ensure that the added relay coil can have an effect of enhancing a magnetic field strength at the coil 2, the relay coil needs to be set to be at a short distance from the coil 1. For example, the distance between the relay coil and the coil 1 is less than the third value, to avoid a case that the relay coil is set to be too far so that there is no magnetic field of the relay coil at the coil 2. In addition, a direction of a current in the relay coil and a direction of a current in the coil 1 may be the same or different, but specifically need to be determined according to sizes and relative positions of the coil 1 and the relay coil. For a current direction determining method, refer to introduction to (1) in FIG. 3B. Details are not described herein again.

A design effect brought by FIG. 3C is embodied in: expanding a relative angle between a sending coil and a receiving coil. This is different from the case in (1) in FIG. 3B. The distance between the relay coil and the coil 2 in FIG. 3C is larger than the distance between the coil 1 and the coil 2, and therefore the added relay coil focuses on improving the card reading and swiping area. However, the distance between the relay coil and the coil 2 in (1) in FIG. 3B is smaller than the distance between the coil 1 and the coil 2, and therefore the added relay coil can improve both the card reading and swiping area and the card swiping distance.

FIG. 3A to FIG. 3C only describe schematic diagrams of an antenna apparatus when there is no other metal assembly near the antenna apparatus in the electronic device 100, and the following describes schematic diagrams of an antenna apparatus when there is another metal assembly near the antenna apparatus in the electronic device 100.

The metal assembly is usually disposed on the housing of the electronic device 100, that is, on the right side of the foregoing coil 1. Therefore, disposing the relay coil at a position close to the metal assembly, for example, between the coil 1 and the metal assembly (or may be disposed on the right side of the metal assembly) may be used to counterbalance/reduce impact of the existing metal assembly on the antenna apparatus, thereby improving performance of the NFC antenna.

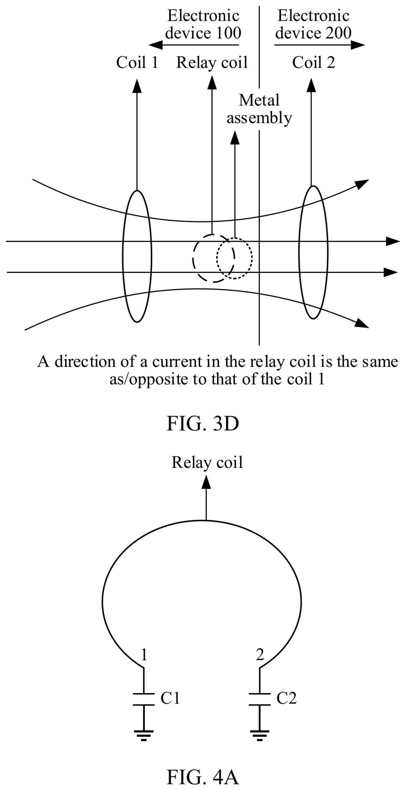

FIG. 3D shows a design method for a relay coil in an antenna apparatus when there is another metal assembly near the antenna apparatus in the electronic device 100.

As shown in FIG. 3D, the antenna apparatus of the electronic device 100 includes a coil 1 and a relay coil, and in addition, further includes a matching circuit (a design method of the matching circuit is described below) that is not shown, and the relay coil and the metal assembly are both disposed between the coil 1 and a first face of the electronic device, that is, a right side of the coil 1. In addition, the size of the relay coil may be greater than, less than, or equal to the size of the metal assembly. The size of the relay coil shown in FIG. 3D is merely an example, and this application does not limit the size of the relay coil.

In the foregoing case, a direction of a current in the relay coil and a direction of a current in the coil 1 may be the same or different. Regardless of whether the direction of the current in the relay coil and the direction of the current in the coil 1 are the same or different, a direction of a current in the metal assembly is opposite to the direction of the current in the relay coil because the metal assembly generates a reverse induction current in a magnetic field generated by the relay coil. To enhance a net magnetic field generated at the coil 2 by the coil 1, the relay coil, and the metal assembly, sizes and relative positions of the coil 1, the relay coil, and the metal assembly are set according to the following implementations:
Manner 1: The metal assembly and the relay coil are both located between the coil 1 and the coil 2, a size of the relay coil is less than, equal to, or greater than a size of the metal assembly, and a resonance frequency of the relay coil is higher than a working frequency of the main coil. In this way, a net magnetic field generated at the coil 2 by the coil 1, the relay coil, and the metal assembly is enhanced.
Manner 2: A size of the relay coil is at least less than or equal to twice a size of the metal assembly, and a resonance frequency of the relay coil is lower than a working frequency of the main coil. In this way, a net magnetic field generated at the coil 2 by the coil 1, the relay coil, and the metal assembly is enhanced. That the size of the relay coil is equal to twice the size of the metal assembly is an extreme condition. The extreme condition is a condition corresponding to a case that the relay coil and the metal assembly are in a same plane. However, when the relay coil and the metal assembly are not in a same plane, the size of the relay coil is less than twice the size of the metal assembly.

A design effect brought by FIG. 3D is embodied in: counterbalancing/reducing shielding impact of the existing metal assembly on the antenna apparatus, and improving transmission performance of the antenna.

It may be understood that, the sizes of the coil 1 and the coil 2 shown in FIG. 3A to FIG. 3D are merely examples. The size of the coil 1 is merely used for describing the size of the relay coil relative to the size of the coil 1. The size of the coil 2 may be larger or smaller than or the same as the size of the coil 1. This is not specifically limited in this application.

2. Secondly, a matching circuit of a relay coil is designed.

Based on the several forms of relay coils introduced in FIG. 3A to FIG. 3D, to enable each form of relay coil to satisfy the foregoing condition of being in a phase the same as or in a direction opposite to the current direction in the coil 1, so as to achieve an effect of enhancing a net magnetic field, a corresponding matching circuit needs to be designed for the relay coil. The matching circuit is a circuit formed by L and/or C. The relay coil and the matching circuit form a resonance circuit. After L and C in the matching circuit are determined, a resonance frequency of the relay coil is fixed. Therefore, in this application, the value of L and/or C is set to adjust the resonance frequency of the relay coil to a target value, so that the resonance frequency of the relay coil is greater than/less than the working frequency of the main coil, to ensure that a current direction of the relay coil, a current direction of the main coil, and a current direction of the metal assembly satisfy a preset condition (that is, the foregoing condition corresponding to the relay coil shown in FIG. 3A to FIG. 3D), thereby enhancing a net magnetic field and improving performance of the antenna apparatus. Specifically, when the resonance frequency of the relay coil is greater than the working frequency of the main coil, the relay coil is capacitive, and the current direction of the relay coil is the same as the current direction of the main coil. When the resonance frequency of the relay coil is less than the working frequency of the main coil, the relay coil is inductive, and the current direction of the relay coil is opposite to the current direction of the main coil.

In this embodiment of this application, when the antenna apparatus is an NFC apparatus, a working frequency of the main coil is 13.56 Mhz.

In an optional implementation, when some relay coils and a parasitic capacitor in the electronic device 100 already form a resonance circuit, and resonance frequencies of the relay coils are already close to a working frequency of the main coil, a matching circuit does not need to be additionally disposed for this type of relay coils, and the relay coils may be directly formed into a closed loop, thereby enhancing performance or reducing metal impact.

Next, several matching circuit design methods are specifically described with reference to FIG. 4A to FIG. 4F.

As shown in FIG. 4A, when a relay coil is a newly added coil in an electronic device 100, the relay coil is equivalent to an inductor. In this case, a matching circuit may be specifically sequentially connected to a capacitor C1 and grounded, and sequentially connected to a capacitor C2 and grounded at two ends of the coil, for example, a port 1 and a port 2, so as to form a resonance circuit with the relay coil.

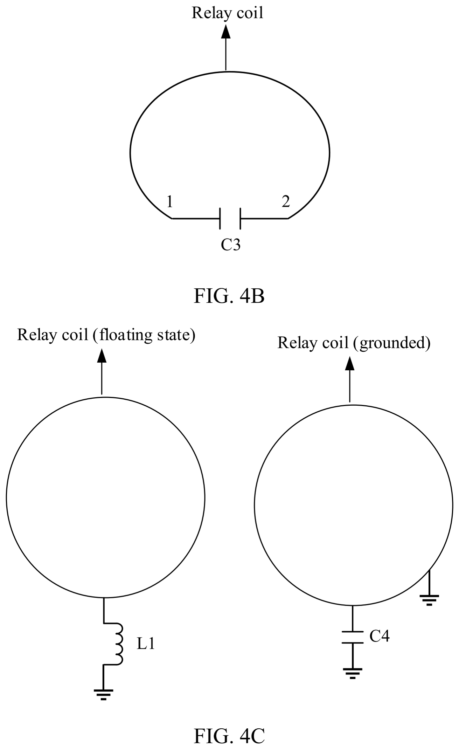

As shown in FIG. 4B, when a relay coil is a newly added coil in an electronic device 100, the relay coil is equivalent to an inductor. In this case, a matching circuit may be specifically connected to a capacitor C3 between two ends of the coil, for example, a port 1 and a port 2, so as to form a resonance circuit with the relay coil.

It may be understood that, the resonance circuit shown in FIG. 4B and the resonance circuit shown in FIG. 4A are equivalent circuits. In addition, the equivalent circuit may have another form, is not limited in this embodiment of this application, and may be specifically designed according to an existing circuit of the electronic device 100.

As shown in FIG. 4C, when a relay coil is a metal sheet or a metal ring in a reused electronic device 100, when the metal sheet/metal ring is in a floating state and is not grounded, the metal sheet/metal ring may be equivalent to a capacitor. Therefore, if a resonance circuit is to be constructed, the relay coil needs to be connected to an inductor L1 and then is grounded, so as to form a resonance circuit with the relay coil. When the metal sheet/metal ring is already grounded, the metal sheet/metal ring may be equivalent to an inductor. Therefore, if a resonance circuit is to be constructed, the relay coil needs to be connected to a capacitor C4 and then is grounded, so as to form a resonance circuit with the relay coil.

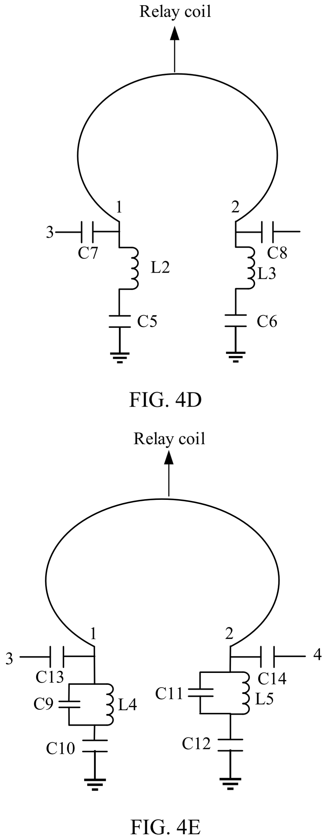

When the relay coil includes another antenna apparatus in the reused electronic device 100, which is equivalent to when the relay coil is appropriately collectively designed with another antenna (also referred to as a first antenna apparatus), a corresponding matching circuit is described in FIG. 4D to FIG. 4F below.

As shown in FIG. 4D, when a signal frequency of the first antenna apparatus is higher than a signal frequency of the NFC antenna, and a difference between working frequencies of the two is a fourth value, where the fourth value may be, for example, 580 Mhz, the first antenna apparatus may be a cellular antenna. Because the working frequency of the cellular antenna is usually above 600 Mhz, and the working frequency is much higher than the working frequency 13.56 Mhz of NFC, the cellular antenna may be used as a relay coil by tuning the cellular antenna to approximately 13.56 Mhz. Specifically, the matching circuit may be specifically sequentially connected to an inductor L2 and a capacitor C5 and grounded, and sequentially connected to an inductor L3 and a capacitor C6 and grounded at two ends of the relay coil, for example, a port 1 and a port 2; and further needs to be sequentially connected to a capacitor C7 at the port 1 and connect a port 3 of the capacitor C7 to the collectively designed first antenna apparatus, and to be sequentially connected to a capacitor C8 at the port 2 and connect a port 4 of the capacitor C8 to the collectively designed first antenna apparatus, so as to form a resonance circuit with the relay coil. In addition, the capacitor C7 and the capacitor C8 may be configured to prevent NFC signals in a low frequency band from passing through paths 3 and 4. L2 and L3 may be used for preventing a cellular signal whose frequency is higher than that of NFC from passing through.

As shown in FIG. 4E, when a signal frequency of the first antenna apparatus is higher than a signal frequency of the NFC antenna, and a difference between working frequencies of the two is a fourth value, where the fourth value may be, for example, 580 Mhz, the first antenna apparatus may be a cellular antenna. Because the working frequency of the cellular antenna is usually above 600 Mhz, and the working frequency is much higher than the working frequency 13.56 Mhz of NFC, the cellular antenna may be used as a relay coil by tuning the cellular antenna to approximately 13.56 Mhz. Specifically, the matching circuit may be sequentially connected in parallel to a capacitor C9 and an inductor L4 and then connected in series to a capacitor C10 and then grounded, and connected in parallel to a capacitor C11 and an inductor L5 and then connected in series to a capacitor C12 and then grounded at two ends of the relay coil, for example, a port 1 and a port 2; and further needs to be sequentially connected to a capacitor C13 at the port 1 and connect a port 3 of the capacitor C13 to the collectively designed first antenna apparatus, and to be sequentially connected to a capacitor C14 at the port 2 and connect a port 4 of the capacitor C14 to the collectively designed first antenna apparatus, so as to form a resonance circuit with the relay coil. In addition, the capacitor C13 and the capacitor C14 may be configured to prevent NFC signals (13.56 Mhz signals) in a low frequency band from passing through paths 3 and 4. L4, L5, C10, and C12 may be used for preventing a cellular signal whose frequency is higher than that of NFC from passing through. In an implementable manner, L4, L5, C10, and C12 may be used for preventing a signal whose frequency is higher than 13.56 Mhz from passing through. In some embodiments, L4, L5, C10, and C12 are mainly used for preventing a signal whose frequency is higher than 600 Mhz from passing through.

It may be understood that, a difference between the matching circuit shown in FIG. 4E and the matching circuit shown in FIG. 4D lies in that the added capacitor C9 and capacitor C11 in FIG. 4E can further reduce impact on a cellular signal.

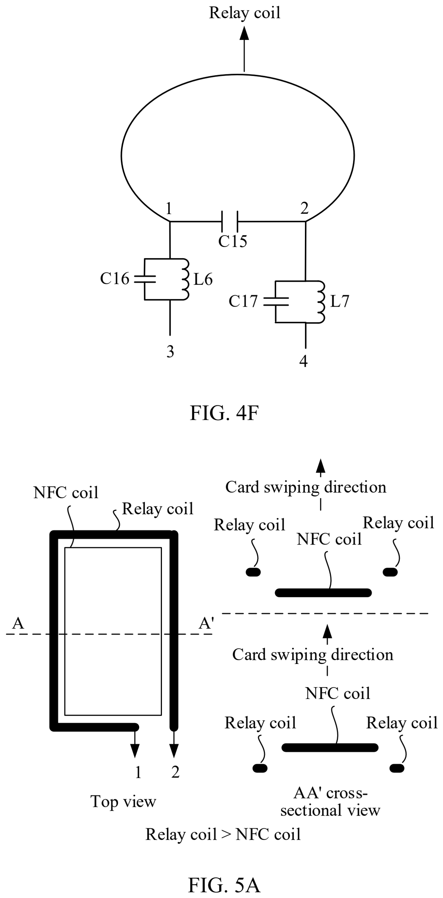

As shown in FIG. 4F, when a signal frequency of the first antenna apparatus is lower than a signal frequency of the NFC antenna, and a difference between working frequencies of the two is a fifth value, where the fifth value may be, for example, 10 Mhz, the first antenna apparatus may be a WPC antenna. Because the working frequency of WPC is usually between 110 Khz and 148.5 Khz, and the working frequency band is much lower than the working frequency 13.56 Mhz of NFC, a WPC coil with a high-order harmonic wave may be used as a relay coil by tuning the high-order harmonic wave to approximately 13.56 Mhz. Specifically, the matching circuit may be connected in series to a capacitor C15 between two ends of the relay coil, for example, a port 1 and a port 2, so as to form a resonance circuit. In addition, a capacitor C16 and an inductor L6 are connected in parallel at the port 1, and then the other end, that is, a port 3, of the inductor L6 is connected to the first antenna apparatus; and a capacitor C17 and an inductor L7 are connected in parallel at the port 2, and then the other end, that is, a port 4, of the inductor L7 is connected to the first antenna apparatus. The capacitor C15 may be configured to prevent a WPC signal from passing through. A notch network formed by L6, C15, L7, and C17 may be used for preventing a cellular signal whose frequency is NFC from passing through, and C15 and C16 may be further used for reducing loss of a WPC signal by L6 and L7.

Optionally, when there is a parasitic capacitor in an environment in which the relay coil in FIG. 4F is located, and a high-order harmonic wave of the relay coil is located near 13.56 Mhz, the foregoing capacitor C15 does not need to be additionally added, and the relay coil and the parasitic capacitor are already constructed into a resonance circuit.

In this embodiment of this application, as shown in FIG. 4A to FIG. 4F, the capacitor C1, the capacitor C2, ..., the capacitor C5, ..., and the capacitor C17 may also be referred to as a first capacitance, a second capacitance, ..., a fifth capacitor, ..., and a seventeenth capacitor, and the inductor L1, the inductor L2, ..., and the inductor L7 may also be referred to as a first inductor, a second inductor, ..., and a seventh inductor.

It may be understood that, the foregoing FIG. 4A to FIG. 4F merely show examples of several matching circuits applicable to different types of relay coils. In addition, a specific circuit topology of the matching circuit may be further another circuit topology, and may further include other more or fewer components. For example, the foregoing C1 to C13 may be a combination of one or more components having a same resistance, and are not limited to one component, and the foregoing L1 to L5 may also be a combination of one or more components having a same resistance, and are not limited to one component.

Based on the foregoing described matching circuit design method, the resonance circuit formed by the relay coil and the matching circuit may be tuned.

When a relay coil design method is the foregoing method shown in (1) of FIG. 3A, a tuning method is specifically: A value of C and/or L in the resonance circuit is set, so that a resonance frequency of the relay coil is higher than a working frequency of the main coil, and then the relay coil is capacitive, and has a current direction the same as that of the main coil, thereby enhancing a magnetic field. When a relay coil design method is the foregoing method shown in (2) of FIG. 3A, a value of C and/or L in the resonance circuit is set, so that a resonance frequency of the relay coil is higher/lower than a working frequency of the main coil, and then the relay coil is capacitive/inductive, and has a current direction the same as/opposite to that of the main coil, thereby enhancing a magnetic field. Preferably, the specifically causing the resonance frequency of the relay coil to be higher/lower than the working frequency of the main coil depends on which matching circuit uses a relatively small quantity of L and C, that is, the matching circuit is simple and has low costs.

When a relay coil design method is the foregoing method in which the region 1 is larger than the region 2 shown in (1) of FIG. 3B, a tuning method is specifically: A value of C and/or L in the resonance circuit is set, so that a resonance frequency of the relay coil is higher than a working frequency of the main coil, and then the relay coil is capacitive, and has a current direction the same as that of the main coil, thereby enhancing a magnetic field. When a relay coil design method is the foregoing method in which the region 1 is smaller than the region 2 shown in (1) of FIG. 3A, a value of C and/or L in the resonance circuit is set, so that a resonance frequency of the relay coil is lower than a working frequency of the main coil, and then the relay coil is inductive, and has a current direction opposite to that of the main coil, thereby expanding an area covered by a magnetic field. When a relay coil design method is the foregoing method shown in (2) of FIG. 3B, a tuning method is the same as the foregoing method corresponding to (2) of 3A, and details are not described herein again.

When a relay coil design method is the foregoing method in which the region 1 is larger than the region 2 shown in FIG. 3C, a value of C and/or L in the resonance circuit is set, so that a resonance frequency of the relay coil is higher than a working frequency of the main coil, and then the relay coil is capacitive, and has a current direction the same as that of the main coil, thereby enhancing a magnetic field. When a relay coil design method is the foregoing method in which the region 1 is smaller than the region 2 shown in (1) of FIG. 3A, a value of C and/or L in the resonance circuit is set, so that a resonance frequency of the relay coil is lower than a working frequency of the main coil, and then the relay coil is inductive, and has a current direction opposite to that of the main coil, thereby expanding an area covered by a magnetic field.

When a relay coil design method is the foregoing method shown in FIG. 3D, a tuning method is specifically: A value of C and/or L in the resonance circuit is set, so that a resonance frequency of the relay coil is higher/lower than a working frequency of the main coil, and then the relay coil is capacitive/inductive, and has a current direction the same as/opposite to that of the main coil, thereby enhancing a net magnetic field formed after the magnetic fields of the coil 1, the relay coil, and the metal assembly are superposed.

Optionally, in another implementable method of this application, if there is a plurality of relay coils, different relay coils may be tuned at different frequencies based on increasing a magnetic field strength, to achieve better compatibility.

Next, with reference to FIG. 5A to FIG. 5I, FIG. 6, FIG. 7A to FIG. 7B, FIG. 8, and FIG. 9, schematic diagrams of several antenna apparatuses applied to electronic devices of different forms, for example, applied to an electronic device 100 of a form such as a mobile phone, a watch, a computer, a remote control, or a stereo are described. The antenna apparatus is only shown by using NFC as an example. In addition, the antenna apparatus provided in this application may also be applied to an electronic device 100 in another form. This is not limited in this embodiment of this application.

Referring to FIG. 5A to FIG. 5I, FIG. 5A to FIG. 5I are schematic diagrams of several antenna apparatuses applied to a mobile phone according to an embodiment of this application.

As shown in FIG. 5A, when an antenna apparatus is applied to a mobile phone, an NFC coil is usually disposed near a battery back cover of the mobile phone. When the mobile phone is used to perform NFC card swiping, a direction of the battery back cover needs to be brought into proximity with a peer NFC device. Therefore, FIG. 5A shows an example of a top view of the antenna apparatus from a top view of the mobile phone. It can be seen that when the size of a relay coil is larger than that of an NFC coil, the relay coil may be disposed above or below the NFC coil shown in a cross-sectional view AA', which corresponds to the foregoing relay coil setting method shown in FIG. 3B or FIG. 3C.

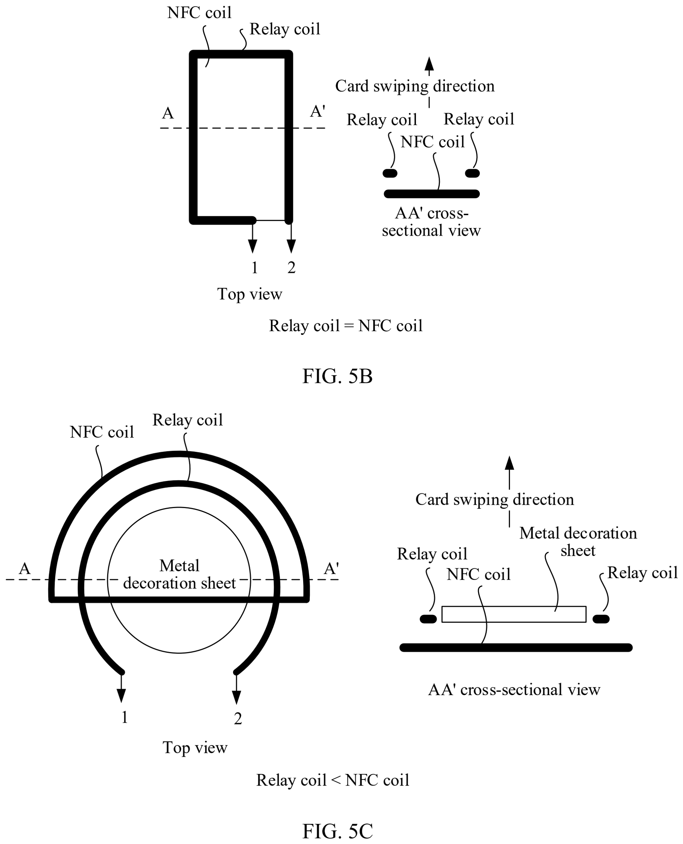

As shown in FIG. 5B, when an antenna apparatus is applied to a mobile phone, an NFC coil is usually disposed near a battery back cover of the mobile phone. When the mobile phone is used to perform NFC card swiping, a direction of the battery back cover needs to be brought into proximity with a peer NFC device. Therefore, FIG. 5B shows an example of a top view of the antenna apparatus from a top view of the mobile phone. It can be seen that when the size of a relay coil is equal to that of an NFC coil, the relay coil may be disposed above the NFC coil shown in a cross-sectional view AA', which corresponds to the foregoing relay coil setting method shown in FIG. 3A. Only in this way, a better magnetic field enhancement effect can be achieved.

As shown in FIG. 5C, when an antenna apparatus is applied to a mobile phone, an NFC coil is usually disposed near a battery back cover of the mobile phone. When the mobile phone is used to perform NFC card swiping, a direction of the battery back cover needs to be brought into proximity with a peer NFC device. Therefore, FIG. 5C shows an example of a top view of the antenna apparatus from a top view of the mobile phone. It can be seen that when the size of a relay coil is smaller than that of an NFC coil, the relay coil needs to be disposed above the NFC coil shown in a cross-sectional view AA', which corresponds to the foregoing relay coil setting method shown in FIG. 3D.

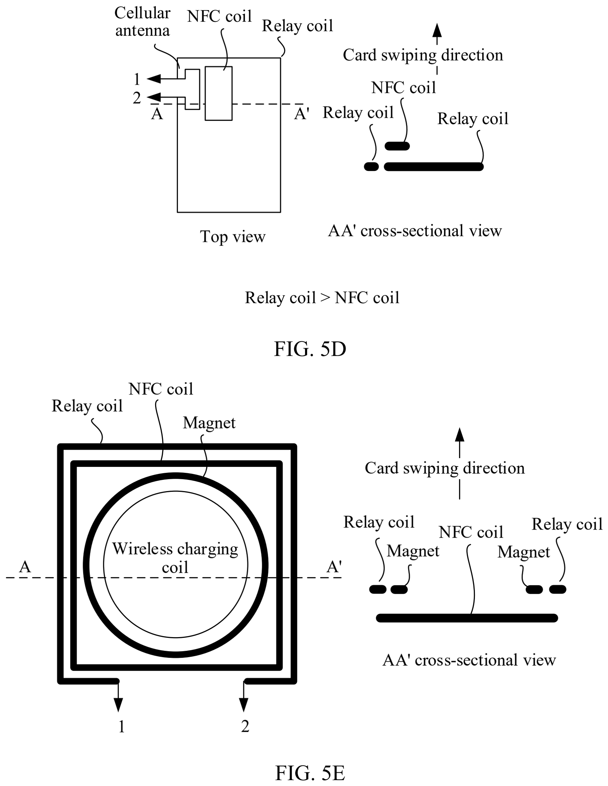

As shown in FIG. 5D, when an antenna apparatus is applied to a mobile phone, an NFC coil is usually disposed near a battery back cover of the mobile phone. When the mobile phone is used to perform NFC card swiping, a direction of the battery back cover needs to be brought into proximity with a peer NFC device. Therefore, FIG. 5D shows an example of a top view of the antenna apparatus from a top view of the mobile phone. It can be seen that when the relay coil reuses the existing cellular antenna, and the size of a relay coil is larger than that of an NFC coil, the relay coil may be disposed above or below the NFC coil, and only an example in which the relay coil is disposed above the NFC coil is shown in a cross-sectional view AA'.

As shown in FIG. 5E, when an antenna apparatus is applied to a mobile phone, an NFC coil is usually disposed near a battery back cover of the mobile phone. When the mobile phone is used to perform NFC card swiping, a direction of the battery back cover needs to be brought into proximity with a peer NFC device. Therefore, FIG. 5E shows an example of a top view of the antenna apparatus from a top view of the mobile phone. It can be seen that when a magnet assembly is disposed on an NFC attachment, the size of the relay coil may be set to be greater than the size of the magnet, to reduce/counterbalance impact of the magnet assembly on an NFC signal, the relay coil may be disposed above the NFC coil as shown in a cross-sectional view AA', and the size of the relay coil may be greater than or equal to that of the relay coil.

The foregoing description is made by using only an example in which the relay coil is a newly added coil or reuses an existing cellular antenna, and the following description is made by using an example in which the relay coil is a reused metal assembly on a mobile phone.

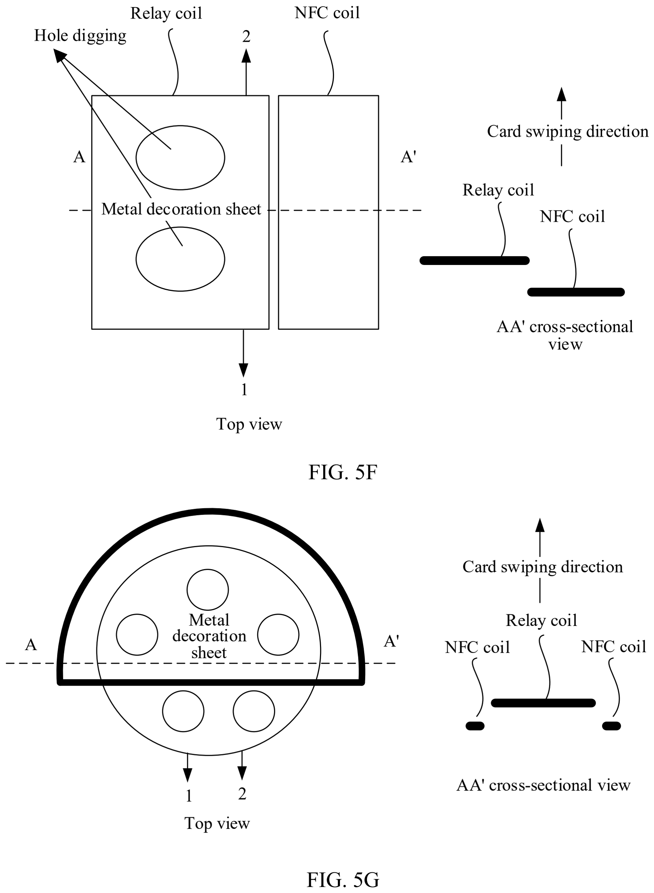

As shown in FIG. 5F, when an antenna apparatus is applied to a mobile phone, an NFC coil is usually disposed near a battery back cover of the mobile phone, and a metal decorative sheet may be disposed on the battery back cover of the mobile phone. When the mobile phone is used to perform NFC card swiping, a direction of the battery back cover needs to be brought into proximity with a peer NFC device. Therefore, FIG. 5F shows an example of a top view of the antenna apparatus from a top view of the mobile phone. It can be seen that holes are dug on a metal assembly to obtain a relay coil, and when the size of the relay coil is set to be larger than the size of the NFC, the relay coil may be disposed above the NFC coil as shown in a cross-sectional view AA'.

As shown in FIG. 5G, when an antenna apparatus is applied to a mobile phone, an NFC coil is usually disposed near a battery back cover of the mobile phone, and a metal decorative sheet may be disposed on the battery back cover of the mobile phone. When the mobile phone is used to perform NFC card swiping, a direction of the battery back cover needs to be brought into proximity with a peer NFC device. Therefore, FIG. 5G shows an example of a top view of the antenna apparatus from a top view of the mobile phone. It can be seen that holes are dug on a metal assembly to obtain a relay coil, and when the size of the relay coil is set to be larger than the size of the NFC, the relay coil may be disposed above the NFC coil as shown in a cross-sectional view AA'.

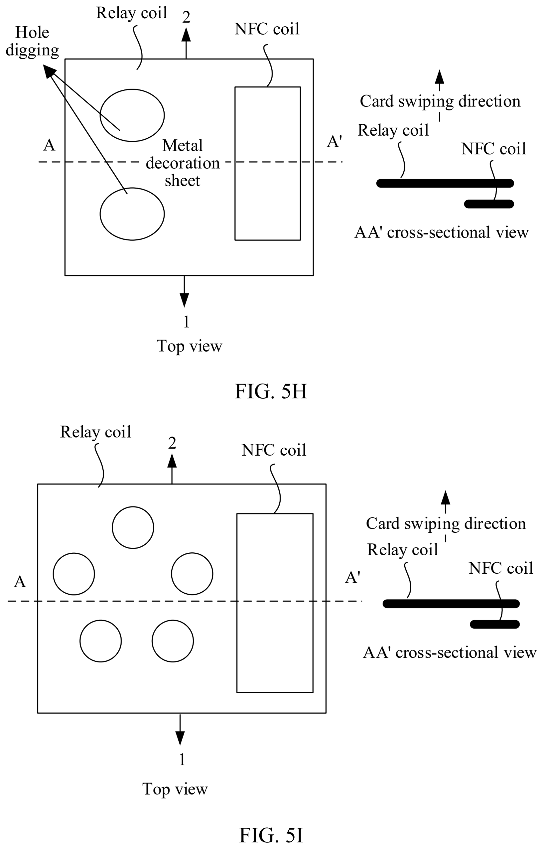

FIG. 5H and FIG. 5I are similar to FIG. 5F introduced above, and a difference lies in that the metal decorative sheet in FIG. 5H is larger than the metal decorative sheet in FIG. 5F, that is, the size of the relay coil in FIG. 5H is larger than the size of the relay coil in FIG. 5F. The metal decorative sheet in FIG. 5I is larger than the metal decorative sheet in FIG. 5F, and dug holes of the metal decorative sheet in FIG. 5I are more than dug holes of the metal decorative sheet in FIG. 5F. Particularly, when the relay coil is a metal decorative sheet, a larger number of dug holes in the metal decorative sheet can increase a magnetic field strength in a card swiping direction and improve a communication effect. In addition, the metal decorative sheet may alternatively have another shape.

It may be understood that positions of the port 1 and the port 2 in FIG. 5A to FIG. 5I may be any position on the relay coil. The port 1 is connected to a matching circuit port 2 and grounded, and the port 2 is connected to a matching circuit port 1 and grounded. Alternatively, another position on the relay coil may be grounded.

In this embodiment of this application, a manufacturing process of the relay coil in the mobile phone may be FPC, LDS, PDS printing, or an existing antenna apparatus, and a metal assembly (a middle frame, an insert steel sheet, a metal decoration, a metal ring, or the like). The relay coil in the mobile phone may be specifically disposed on a mobile phone holder, a battery cover, a mainboard holder, or a mainboard holder, or may be designed on a protective case of the mobile phone. This is not limited in this embodiment of this application.

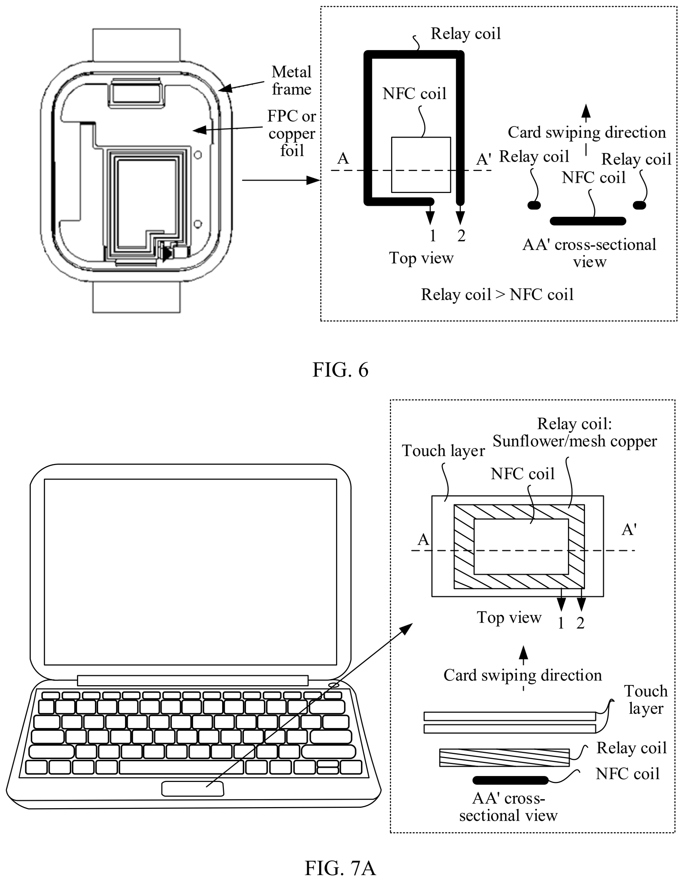

Referring to FIG. 6, FIG. 6 is a schematic diagram of an antenna apparatus applied to a watch according to an embodiment of this application.

As shown in FIG. 6, for a relay coil, either or both of an existing metal frame in the watch and an FPC or a copper foil around an NFC coil may be applied. FIG. 6 shows an example of a top view of the antenna apparatus from a top view of the watch. It can be seen that when the size of the relay coil is set to be larger than the size of the NFC coil, the relay coil may be disposed above the NFC coil as shown in a cross-sectional view AA'.

Referring to FIG. 7A to FIG. 7B, FIG. 7A to FIG. 7B are schematic diagrams of antenna apparatuses applied to a computer according to an embodiment of this application.

As shown in FIG. 7A, for a relay coil, a sunflower/mesh copper existing in a touch region of a computer may be applied. In the touch region, NFC wiring is located at a fourth layer, the ground of a third layer above is an isolated sunflower shape, and a first layer and a second layer are hollow-out touch layers. Therefore, a hole may be directly dug to the fourth layer at any position on the sunflower at the third layer, and the matching circuit described above is added to any position at the third layer (for example, at a port 1 and a port 2 in the figure) to construct a resonance circuit, so as to adjust a resonance frequency of the relay coil according to a target frequency. FIG. 7A shows an example of a top view of the antenna apparatus from a top view of the touch region. It can be seen that when the size of the relay coil is set to be larger than the size of the NFC coil, the relay coil may be disposed above the NFC coil as shown in a cross-sectional view AA'.

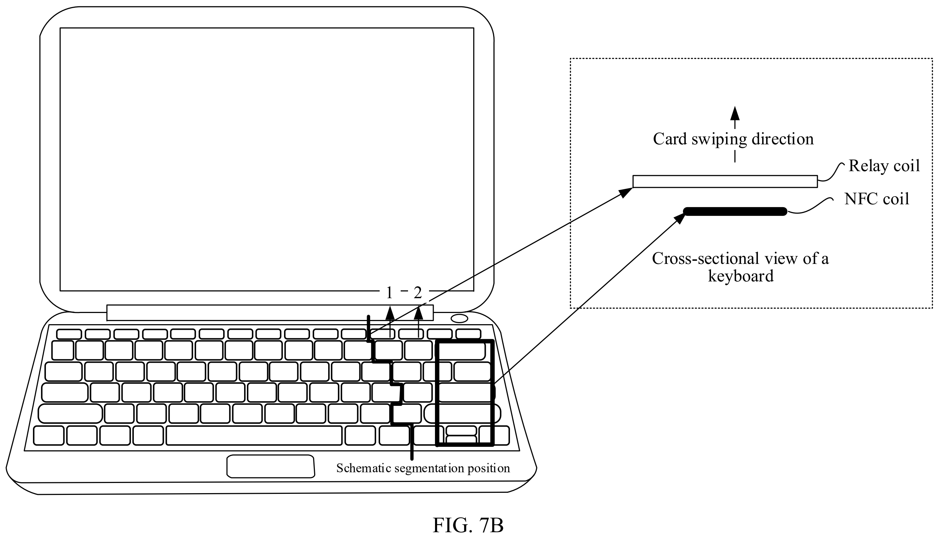

As shown in FIG. 7B, for a relay coil, an existing metal key in a partial keyboard region of a computer may be applied, and the matching circuit described above is added to any position at the metal key (for example, at a port 1 and a port 2 in the figure) to construct a resonance circuit, so as to adjust a resonance frequency of the relay coil according to a target frequency. For example, the right half is cut from a keyboard shown in FIG. 7B because the right half is provided with an NFC coil. Therefore, FIG. 7B shows an example of a top view of the antenna apparatus from a top view of the keyboard region. It can be seen that when the size of the relay coil is set to be larger than the size of the NFC coil, the relay coil may be disposed above the NFC coil as shown in a cross-sectional view AA'.

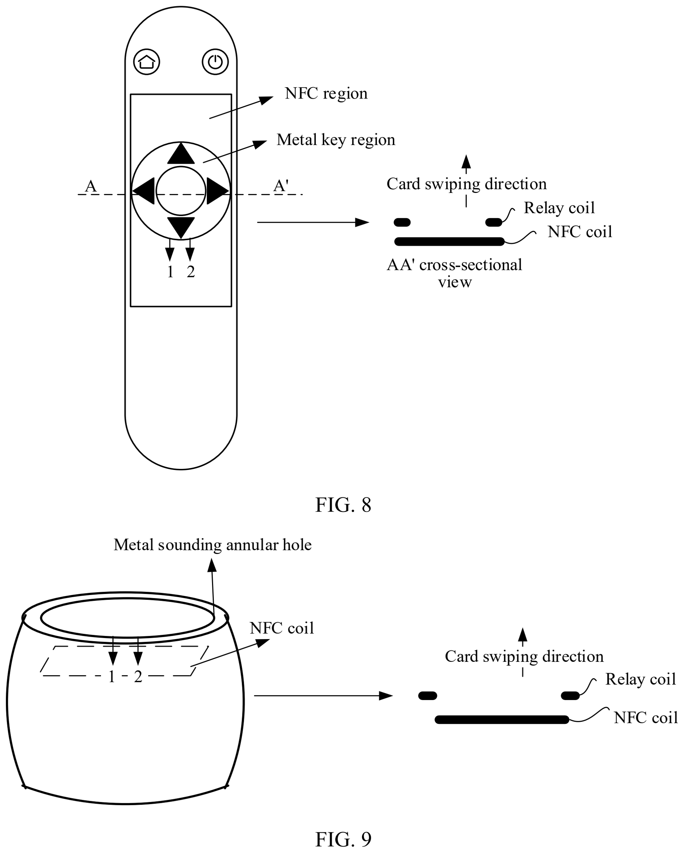

Referring to FIG. 8, FIG. 8 is a schematic diagram of an antenna apparatus applied to a remote control according to an embodiment of this application.

As shown in FIG. 8, some remote controls are provided with a metal direction key, and when an NFC coil is near the metal direction key, the metal direction key may also be reused as a relay coil, and the matching circuit described above is added to any position on the metal direction key (for example, at a port 1 and a port 2 in the figure) to construct a resonance circuit, so as to adjust a resonance frequency of the relay coil according to a target frequency. When the size of the relay coil is set to be the same as the size of the NFC coil, the relay coil may be disposed above the NFC coil as shown in a cross-sectional view AA'.

Referring to FIG. 9, FIG. 9 is a schematic diagram of an antenna apparatus applied to a stereo according to an embodiment of this application.

As shown in FIG. 9, some stereos are provided with a metal sounding annular hole, and when an NFC coil is near the metal sounding annular hole, the metal sounding annular hole may also be reused as a relay coil, and the matching circuit described above is added to any position on the metal sounding annular hole (for example, at a port 1 and a port 2 in the figure), so as to adjust a resonance frequency of the relay coil according to a target frequency. when the size of the relay coil is set to be larger than the size of the NFC coil, the relay coil may be disposed above the NFC coil as shown in a cross-sectional view AA'.

Next, beneficial effects brought after using the antenna apparatus provided in this application are described by using experimental data.

Specifically, an example in which the antenna apparatus is an NFC apparatus is used, and beneficial effects are described by using parameters such as a card swiping distance and a card swiping area.

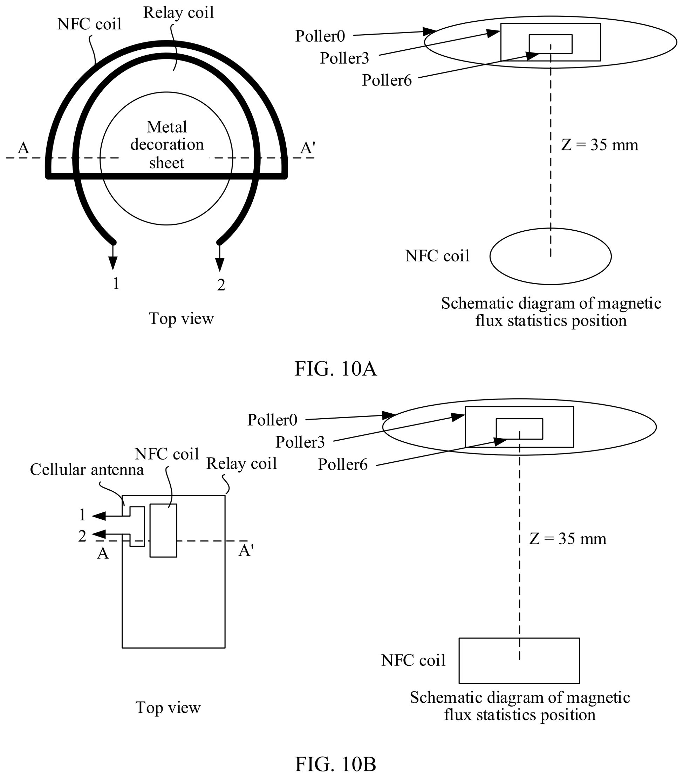

When a top view of a tested antenna apparatus is shown in FIG. 10A, a relay coil of the antenna apparatus is a circle of copper foil, a width of the copper foil is 4.3 mm, a magnetic flux statistics position is a position 35 mm, away from the center, on a central axis of an NFC coil in the antenna apparatus, and magnetic flux statistics areas are respectively three types of test standard coils, that is, poller0, poller3, and poller6. It is found that after the relay coil is added, the magnetic flux can be increased by 24.4% to 30.75%. For details, refer to Table 1. Moreover, when a test object is an identity card, a card reading distance of the identity card is increased by 26.3%, and a card reading area of the identity card is increased by 51.7%; and when a test object is TAGV, a card reading distance of the TAGV is increased by 9.5%, and a card reading area of the TAGV is increased by 27.9%. For details, refer to Table 2.

**Table 1**

| Test coil type | Magnetic flux before a relay coil is added | Magnetic flux after a relay coil is added | Magnetic flux increase amount |
|---|---|---|---|
| poller0 | 1709 | 2468 | 30.75% |
| poller3 | 946 | 1279 | 26.04% |
| Poller6 | 334 | 442 | 24.43% |

**Table 2**

| Test object type | Before a relay coil is added | After a relay coil is added | Increase amount |
|---|---|---|---|
| Identity card reading distance/mm | 14 | 19 | 26.3% |
| Identity card reading area/grid (1 cm^2 per grid) | 19 | 21 | 9.5% |
| TAGV card reading distance/mm | 14 | 29 | 51.7% |
| TAGV card reading area/grid (1 cm^2 per grid) | 44 | 61 | 27.9% |

When a top view of a tested antenna apparatus is shown in FIG. 10B, a magnetic flux statistics position is a position 35 mm, away from the center, on a central axis of an NFC coil in the antenna apparatus, and magnetic flux statistics areas are respectively three types of test standard coils, that is, poller0, poller3, and poller6. It is found that after the relay coil is added, the magnetic flux can be increased by 14.5% to 17.1%. For details, refer to Table 3. Moreover, when a test object is an identity card, a card reading distance of the identity card is increased by 18.2%, and a card reading area of the identity card is increased by 12.5%; and when a test object is TAGV, a card reading distance of the TAGV is increased by 6.1%, and a card reading area of the TAGV is increased by 4.7%. For details, refer to Table 4.

**Table 3**

| Test coil type | Magnetic flux before a relay coil is added | Magnetic flux after a relay coil is added | Magnetic flux increase amount |
|---|---|---|---|
| poller0 | 2374 | 2865 | 17.1% |
| poller3 | 1310 | 1551 | 15.5% |
| Poller6 | 518 | 606 | 14.5% |

**Table 4**

| Test object type | Before a relay coil is added | After a relay coil is added | Increase amount |
|---|---|---|---|
| Identity card reading distance/mm | 18 | 22 | 18.2% |
| Identity card reading area/grid (1 cm^2 per grid) | 21 | 33 | 6.1% |
| TAGV card reading distance/mm | 56 | 64 | 12.5% |
| TAGV card reading area/grid (1 cm^2 per grid) | 41 | 43 | 4.7% |

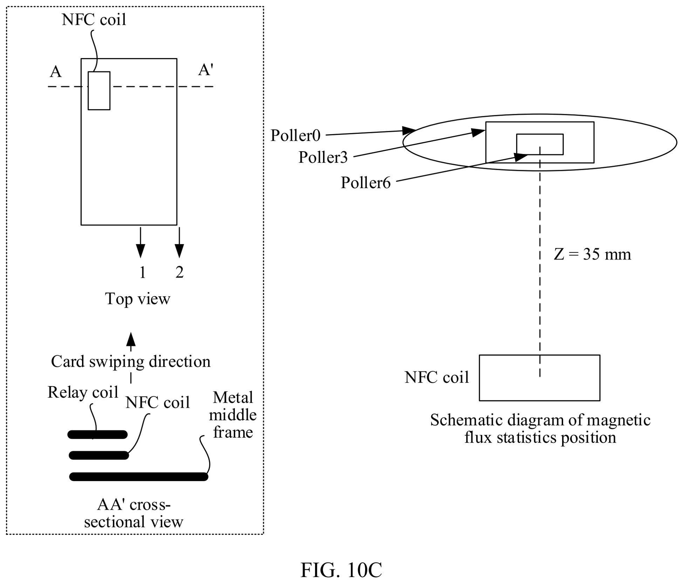

When a top view and a cross-sectional view of a tested antenna apparatus is shown in FIG. 10C, a magnetic flux statistics position is a position 35 mm, away from the center, on a central axis of an NFC coil in the antenna apparatus, and magnetic flux statistics areas are respectively three types of test standard coils, that is, poller0, poller3, and poller6. It is found that after the relay coil is added, and when the relay coil is located 0.1 mm above the projection of the main coil, there is still a benefit for a card reading distance and a card reading area. Specifically, magnetic flux statistics areas are respectively three types of test standard coils, that is, poller0, poller3, and poller6. It is found that after the relay coil is added, the magnetic flux can be increased by 28.4% to 32.4%. For details, refer to Table 5. Moreover, when a test object is an identity card, a card reading distance of the identity card is increased by 37.5%, and a card reading area of the identity card is increased by 12%; and when a test object is TAGV, a card reading distance of the TAGV is increased by 18.9%. For details, refer to Table 6.

**Table 5**

| Test coil type | Magnetic flux before a relay coil is added | Magnetic flux after a relay coil is added | Magnetic flux increase amount |
|---|---|---|---|
| poller0 | 2374 | 2865 | 17.1% |
| poller3 | 1310 | 1551 | 15.5% |
| Poller6 | 518 | 606 | 14.5% |

**Table 6**

| Test object type | Before a relay coil is added | After a relay coil is added | Increase amount |
|---|---|---|---|
| Identity card reading distance/mm | 25 | 40 | 37.5% |
| Identity card reading area/grid (1 cm^2 per grid) | 43 | 53 | 18.9% |
| TAGV card reading distance/mm | 66 | 75 | 12% |
| TAGV card reading area/grid (1 cm^2 per grid) | 43 | 43 | 0 |

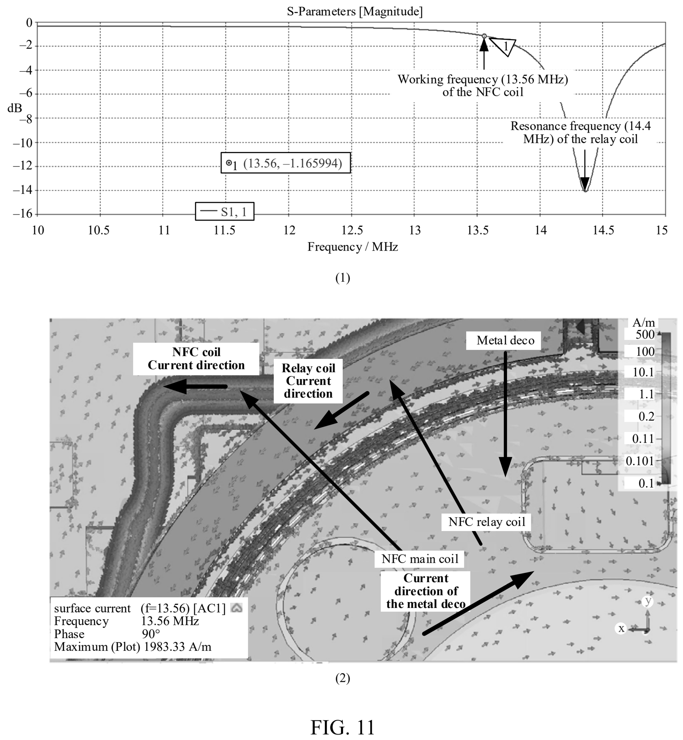

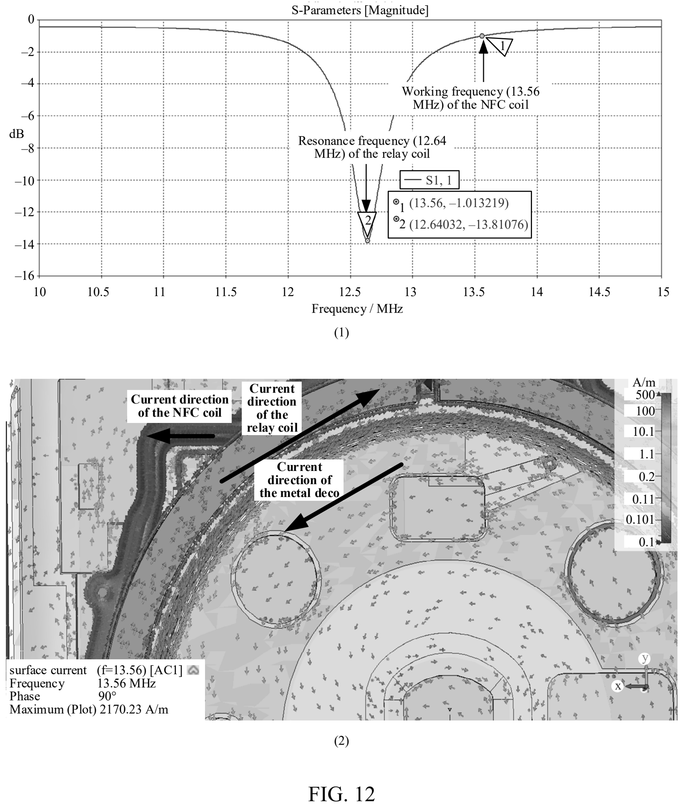

With reference to FIG. 11 and FIG. 12, the following describes schematic diagrams of simulation of two antenna apparatuses according to an embodiment of this application.

As shown in FIG. 11, (1) of FIG. 11 shows an example of a simulation diagram of a working frequency of a relay coil and a corresponding return loss, where a resonance frequency of the relay coil is about 14.4 MHz. 13.56 MHz is a standard working frequency of an NFC coil. As described above, when the resonance frequency of the relay coil is higher than the working frequency of the NFC coil, the relay coil is capacitive at the working frequency of the NFC coil. In this case, the relay coil and the NFC coil have the same current direction, and also have the same magnetic field direction. Specifically, for a current direction simulation diagram of a corresponding antenna apparatus, refer to (2) in FIG. 11, where the current direction of the relay coil is the same as the current direction of the NFC coil. Although a current direction of a metal decorative sheet (deco) is opposite to the current direction of the NFC coil, a net magnetic field obtained by superposing the three has an enhanced magnetic field strength compared with a net magnetic field by superposing the two when the relay coil is not added. Therefore, the magnetic flux of the antenna apparatus can be improved.

As shown in FIG. 12, (1) of FIG. 12 shows an example of a simulation diagram of a working frequency of a relay coil and a corresponding return loss, where a resonance frequency of the relay coil is about 12.64 MHz. When the relay coil works at the resonance frequency, the return loss is the smallest, and the communication effect is the best. 13.56 MHz is a standard working frequency of an NFC coil. As described above, when the resonance frequency of the relay coil is lower than the working frequency of the NFC coil, the relay coil is inductive at the working frequency of the NFC coil. In this case, the relay coil and the NFC coil have opposite current directions, and also have opposite magnetic field directions. Specifically, for a current direction simulation diagram of a corresponding antenna apparatus, refer to (2) in FIG. 12. Although the current direction of the relay coil is opposite to the current direction of the NFC coil, the current direction of the metal deco is the same as the current direction of the NFC coil, so that a net magnetic field obtained by superposing the three counterbalances/reduces impact of the metal deco and has an enhanced magnetic field strength compared with a net magnetic field by superposing the two when the relay coil is not added. Therefore, the magnetic flux of the antenna apparatus can be improved.

Next, product implementation forms of a wireless communication system and an electronic device to which an antenna apparatus provided in this application is applied are described first.

In this application, only an example in which the antenna apparatus is an antenna apparatus providing an NFC function is used for description. In addition, the antenna apparatus designed in this application may further provide another function, such as a wireless charging function or another near-field communication function.

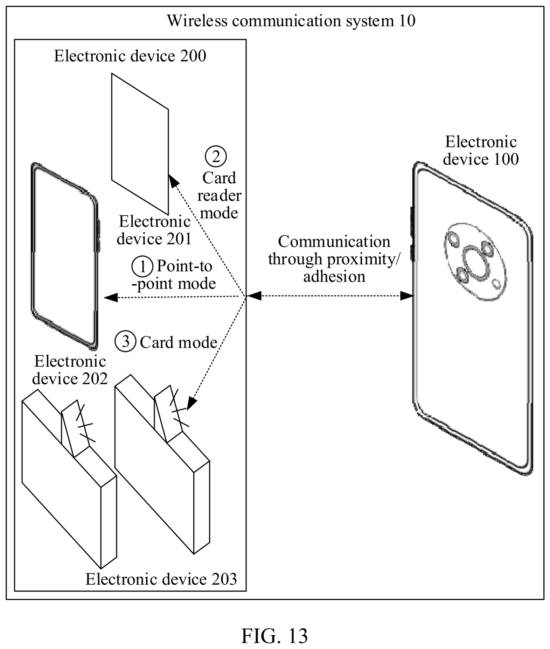

Referring to FIG. 13, FIG. 13 is an exemplary schematic diagram of a wireless communication system 10 according to this application.

As shown in FIG. 13, the method provided in this application is applied to the wireless communication system 10 including at least an electronic device 100 and an electronic device 200.

The electronic device 100 and the electronic device 200 both refer to devices integrating an antenna apparatus, and the antenna apparatus may provide an NFC function. The electronic device 200 may be specifically an electronic device 201, an electronic device 202, or an electronic device 203.

Product implementation forms of the electronic device 100 include but are not limited to, for example, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device (for example, a watch), a vehicle-mounted device, a smart household device, a smart city device, a remote control, or a stereo.

Product implementation forms of the electronic device 201 include but are not limited to, a tag, a bank card, an identity card, a card carrying an electronic identity (Electronic Identity, eID) (eID card for short below), or the like. Product implementation forms of the electronic device 202 include but are not limited to, a mobile phone, a watch, a tablet, a computer, a stereo, or the like; Product implementation forms of the electronic device 203 include but are not limited to, an NFC card reader. When the electronic device 100 is close to/adheres to the electronic device 201/202/203, the electronic device 100 and the electronic device 201/202/203 may transmit data between each other through electromagnetic induction coupling.

When the electronic device 100 is close to/adheres to different types of electronic devices 200, the electronic device 100 may be in different application modes, which may include, for example, a card reader mode, a point-to-point mode, and a card mode. The card reader mode means that the electronic device 100 is in an active mode, reads/writes information from/to the electronic device 201 by sending a radio frequency field, for example, reads related information from a tag in a poster or exhibition information, and identifies an identity card, a bank card, an eID card, or the like of a user. The point-to-point mode means that the electronic device 100 and the electronic device 202 are both in an active mode, and both actively send a radio frequency field to establish a point-to-point wireless communication link, to implement point-to-point data transmission, for example, download music, transfer files to each other, or synchronize device data. The card mode means that the electronic device 100 replaces a bank card, a bus card, an access control card, and a ticket with an IC card and a tag by simulating functions of the IC card and the tag, so that the electronic device 203 reads/identifies the bank card, the bus card, the access control card, and the ticket.

In this embodiment of this application, the antenna apparatus in the electronic device 100 is provided with a relay coil. By using the relay coil, a card reading distance and a card reading area of the NFC function can be enhanced to a larger extent, making it convenient for the user to use the NFC function, thereby improving user experience. In addition, when a metal assembly exists outside the antenna apparatus of the electronic device 100, shielding impact of the metal assembly on the antenna apparatus can be reduced by using the relay coil.

In conclusion, after the antenna apparatus designed in this application or the electronic device 100 is used, robustness of an antenna transmission system can be improved. That is, even when a sending coil and a receiving coil have a large size ratio difference between each other, are at a long distance from each other, are not axially aligned with each other, or have a magnet or metal medium between each other, or a ferrite of a coil is insufficient, effective information transmission can still be implemented between the antenna apparatus and a peer antenna in the antenna transmission system, thereby improving performance of the antenna apparatus.

It should be understood that the steps of the foregoing method embodiment provided in this application may be implemented by using a hardware integrated logic circuit in the processor or implemented by using instructions in a software form. The steps of the method disclosed with reference to the embodiments of this application may be directly performed by a hardware processor, or by a combination of hardware in the processor and a software module.

This application further provides an electronic device, and the electronic device may include a memory and a processor. The memory may be configured to store a computer program, and the processor may be configured to invoke the computer program in the memory to enable the electronic device to perform the method in any one of the foregoing embodiments.

This application further provides a chip system. The chip system includes at least one processor configured to implement the functions involved in the method performed by the electronic device in any one of the foregoing embodiments.

In a possible design, the chip system further includes a memory. The memory is configured to store program instructions and data. The memory is located inside the processor or outside the processor.

The chip system may include a chip, or may include a chip and another discrete device.

Optionally, the chip system may include one or more processors. The processor may be implemented by using hardware or by using software. When implemented by using hardware, the processor may be a logic circuit, an integrated circuit, or the like. When implemented by using software, the processor may be a general-purpose processor and be implemented by reading software code stored in the memory.

Optionally, the chip system may also include one or more memories. The memory may be integrated with the processor, or may be separated from the processor. This is not limited in embodiments of this application. For example, the memory may be a non-transitory memory such as a read-only memory ROM, and the memory and the processor may be integrated on a same chip, or may be respectively arranged on different chips. A type of the memory and a manner of disposing the memory and the processor are not limited in embodiments of this application.

For example, the chip system may be a field programmable gate array (field programmable gate array, FPGA), an application specific integrated circuit (application specific integrated circuit, ASIC), a system on chip (system on chip, SoC), a central processor unit (central processor unit, CPU), a network processor (network processor, NP), a digital signal processor (digital signal processor, DSP), a micro controller unit (micro controller unit, MCU), a programmable logic device (programmable logic device, PLD), or another integrated chip.

This application further provides a computer program product, and the computer program product includes a computer program (which may also be referred to as code or an instruction). When the computer program is run, a computer is enabled to perform the method performed by the electronic device in any one of the foregoing embodiments.

This application further provides a computer-readable storage medium. The computer-readable storage medium stores a computer program (which may also be referred to as code or an instruction). When the computer program is run, a computer is enabled to perform the method performed by the electronic device in any one of the foregoing embodiments.

Various implementations of this application may be combined randomly to achieve different technical effects.

All or some of the foregoing embodiments may be implemented by software, hardware, firmware, or any combination thereof. When software is used to implement the embodiments, all or some of the embodiments may be implemented in the form of a computer program product. The computer program product includes one or more computer instructions. When the computer program instructions are loaded and executed on a computer, all or some of the procedures or functions according to this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, through a coaxial cable, an optical fiber, or a digital subscriber line) or in a wireless manner (for example, through infrared rays, radio, or microwave). The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk)), or the like.

A person of ordinary skill in the art may understand that all or some of the procedures of the methods in the foregoing embodiments are implemented. The procedures may be completed by a computer program instructing related hardware. The program may be stored in a computer-readable storage medium. When the program is executed, the procedures in the foregoing method embodiments may be included. The foregoing storage medium includes various media that can store program code, for example, a ROM, a random access memory RAM, a magnetic disk, or an optical disc.

In conclusion, the foregoing is merely embodiments of the technical solutions of the present invention, but is not intended to limit the protection scope of the present invention. Any modifications, equivalent replacements, improvements, or the like made based on the disclosure of the present invention shall fall within the protection scope of the present invention.

## Claims

1. An electronic device, wherein the electronic device comprises a near-field communication (NFC) antenna apparatus, and the NFC antenna apparatus comprises: a main coil, and one or more relay coils, wherein
the relay coil is coupled to the main coil, the relay coil is located between the main coil and a first face of the electronic device, and the first face is a contact face of the electronic device when performing NFC; and
a distance between the relay coil and the main coil is less than a first value, and a resonance frequency of the relay coil is higher than a working frequency of the main coil; or a distance between the relay coil and the main coil is greater than a second value, and a resonance frequency of the relay coil is higher/lower than a working frequency of the main coil.

2. The electronic device according to claim 1, wherein that the relay coil is coupled to the main coil means that when the electronic device supplies power to the main coil, the relay coil generates an induction current.

3. The electronic device according to claim 1 or 2, wherein that the relay coil is coupled to the main coil means that a projection region of the relay coil on a plane in which the main coil is located has an overlapping part with the main coil, or a distance between the projection region and the main coil is less than a threshold when the projection region has no overlapping part with the main coil.

4. The electronic device according to any one of claims 1 to 3, wherein a size of the relay coil is greater than, less than, or equal to a size of the main coil.

5. An electronic device, wherein the electronic device comprises an NFC antenna apparatus, and the NFC antenna apparatus comprises: a main coil, and one or more relay coils, wherein
the relay coil is coupled to the main coil, the relay coil is located on a first side of the main coil and is also located on a first side of a first face of the electronic device, and the first face is a contact face of the electronic device when performing NFC;
a distance between the relay coil and the main coil is less than a third value, and a size of the relay coil is greater than a size of the main coil; and
a region in which a projection region of the main coil on a plane in which the relay coil is located overlaps with the relay coil is greater than a region in which the projection region of the main coil on the plane in which the relay coil is located does not overlap with the relay coil, and a resonance frequency of the relay coil is higher than a working frequency of the main coil; or a region in which a projection region of the main coil on a plane in which the relay coil is located overlaps with the relay coil is less than a region in which the projection region of the main coil on the plane in which the relay coil is located does not overlap with the relay coil, and a resonance frequency of the relay coil is lower than a working frequency of the main coil.

6. The electronic device according to claim 5, wherein that the relay coil is coupled to the main coil means that when the electronic device supplies power to the main coil, the relay coil generates an induction current.

7. The electronic device according to claim 5 or 6, wherein that the relay coil is coupled to the main coil means that a projection region of the relay coil in a plane in which the main coil is located has an overlapping part with the main coil.

8. An electronic device, wherein the electronic device comprises an NFC antenna apparatus and a metal assembly, and the NFC antenna apparatus comprises: a main coil, and one or more relay coils, wherein
the relay coil is coupled to the main coil, the relay coil is located between the main coil and a first face of the electronic device, and the first face is a contact face of the electronic device when performing NFC;
the relay coil is further coupled to the metal assembly, and the metal assembly is located between the main coil and the first face of the electronic device; and a size of the relay coil is less than, equal to, or greater than a size of the metal assembly, and a resonance frequency of the relay coil is higher than a working frequency of the main coil; or a size of the relay coil is at least less than twice a size of the metal assembly, and a resonance frequency of the relay coil is lower than a working frequency of the main coil.

9. The electronic device according to claim 8, wherein that the relay coil is coupled to the main coil means that when the electronic device supplies power to the main coil, the relay coil generates an induction current.

10. The electronic device according to claim 8 or 9, wherein that the relay coil is coupled to the main coil means that a projection region of the relay coil on a plane in which the main coil is located has an overlapping part with the main coil, or a distance between the projection region and the main coil is less than a threshold when the projection region has no overlapping part with the main coil.

11. The electronic device according to any one of claims 8 to 10, wherein that the relay coil is further coupled to the metal assembly means that when the relay coil generates an induction current, the metal assembly also generates an induction current.

12. The electronic device according to any one of claims 8 to 11, wherein that the relay coil is further coupled to the metal assembly means that a projection region of the relay coil on a plane of the metal assembly has an overlapping part with the metal assembly, or a distance between the projection region and the metal assembly is less than a threshold when the projection region has no overlapping part with the metal assembly coil.

13. The electronic device according to any one of claims 1 to 12, wherein the relay coil is further connected to a matching circuit; and
when the relay coil is equivalent to an inductor, the matching circuit comprises a capacitor, one end of the capacitor is connected to the relay coil, and the other end of the capacitor is grounded; or
when the relay coil is equivalent to a capacitor, the matching circuit comprises an inductor, one end of the inductor is connected to the relay coil, and the other end of the inductor is grounded.

14. The electronic device according to any one of claims 1 to 12, wherein the relay coil is a coil in a first antenna apparatus in the electronic device, and a working frequency of the first antenna apparatus is different from a working frequency of the NFC antenna apparatus.

15. The electronic device according to claim 14, wherein the working frequency of the first antenna apparatus is higher than the working frequency of the NFC antenna apparatus, and a difference between the working frequency of the first antenna apparatus and the working frequency of the NFC antenna apparatus is greater than a fourth value.

16. The electronic device according to claim 14 or 15, wherein the relay coil is further connected to a matching circuit; and
the matching circuit comprises a fifth capacitor, a sixth capacitor, a seventh capacitor, an eighth capacitor, a second inductor, and a third inductor;
one end of the fifth capacitor is connected to a first end of the relay coil, the other end of the fifth capacitor is connected to the first antenna apparatus, one end of the sixth capacitor is connected to a second end of the relay coil, and the other end of the sixth capacitor is connected to the first antenna apparatus; and the fifth capacitor and the sixth capacitor are configured to prevent a signal of the NFC antenna apparatus from passing through; and
one end of the second inductor is connected to the first end of the relay coil, the other end of the second inductor is connected in series to the seventh capacitor and then is grounded, one end of the third inductor is connected to the second end of the relay coil, and the other end of the third inductor is connected in series to the eighth capacitor and then is grounded; and the second inductor and the third inductor are configured to prevent a signal of the first antenna apparatus from passing through.

17. The electronic device according to claim 14 or 15, wherein the relay coil is further connected to a matching circuit; and
the matching circuit comprises a ninth capacitor, a tenth capacitor, an eleventh capacitor, a twelfth capacitor, a thirteenth capacitor, a fourteenth capacitor, a fourth inductor, and a fifth inductor;
one end of the thirteenth capacitor is connected to a first end of the relay coil, the other end of the thirteenth capacitor is connected to the first antenna apparatus, one end of the fourteenth capacitor is connected to a second end of the relay coil, and the other end of the fourteenth capacitor is connected to the first antenna apparatus; and the thirteenth capacitor and the fourteenth capacitor are configured to prevent a signal of the NFC antenna apparatus from passing through; and
the fourth inductor is connected in parallel to the ninth capacitor, one end of the fourth inductor is connected to the first end of the relay coil, the other end of the fourth inductor is connected in series to the tenth capacitor and then is grounded, the fifth inductor is connected in parallel to the eleventh capacitor, one end of the fifth inductor is connected to the second end of the relay coil, and the other end of the fifth inductor is connected in series to the twelfth capacitor and then is grounded; and the fourth inductor and the fifth inductor are configured to prevent a signal of the first antenna apparatus from passing through.

18. The electronic device according to claim 14, wherein the working frequency of the first antenna apparatus is lower than the working frequency of the NFC antenna apparatus, and a difference between the working frequency of the first antenna apparatus and the working frequency of the NFC antenna apparatus is less than a fifth value.

19. The electronic device according to claim 14 or 18, wherein the relay coil is further connected to a matching circuit; and
the matching circuit comprises a fifteenth capacitor, a sixteenth capacitor, a seventeenth capacitor, a sixth inductor, and a seventh inductor;
one end of the fifteenth capacitor is connected to a first end of the relay coil, and the other end of the fifteenth capacitor is connected to a second end of the relay coil; and the fifteenth capacitor is configured to prevent a signal of the first antenna apparatus from passing through; and
the sixth inductor is connected in parallel to the sixteenth capacitor, one end of the sixth inductor is connected to the first end of the relay coil, and the other end of the sixth inductor is connected to a circuit of the first antenna apparatus; the seventh inductor is connected in parallel to the seventeenth capacitor, one end of the seventh inductor is connected to the second end of the relay coil, and the other end of the seventh inductor is connected to the circuit of the first antenna apparatus; and the sixth inductor and the seventh inductor are configured to prevent a signal of the NFC antenna apparatus from passing through.
